(19) Europäisches Patentamt
European Patent Office
Office européen des brevets

(11) **EP 4 184 207 B1**

(12) **EUROPEAN PATENT SPECIFICATION**

(45) Date of publication and mention
of the grant of the patent:
**29.04.2026  Bulletin 2026/18**

(21) Application number: **21210013.5**

(22) Date of filing: **23.11.2021**

(51) International Patent Classification (IPC):
**G01S 13/42** (2006.01)      **G01S 7/40** (2006.01)
**G01S 13/931** (2020.01)

(52) Cooperative Patent Classification (CPC):
**G01S 7/4026; G01S 13/42**

(54) **METHOD AND APPARATUS FOR DETERMINATION OF DIRECTION OF ARRIVAL ANGLE**

VERFAHREN UND VORRICHTUNG ZUR BESTIMMUNG EINES EINFALLSWINKELS

PROCÉDÉ ET APPAREIL DE DÉTERMINATION DE LA DIRECTION DE L'ANGLE D'ARRIVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.05.2023  Bulletin 2023/21**

(73) Proprietor: **NXP B.V.
5656 AG Eindhoven (NL)**

(72) Inventors:
• **BEKOOIJ, Marco Jan Gerrit
Eindhoven (NL)**
• **KOPPELAAR, Arie Geert Cornelis
Eindhoven (NL)**
• **ALHASSON, Saif
Eindhoven (NL)**

(74) Representative: **Krott, Michel
NXP Semiconductors
Intellectual Property & Licensing
High Tech Campus 60
5656 AG  Eindhoven (NL)**

(56) References cited:
**JP-A- 2020 003 333**

• **SIM HEONKYO ET AL: "Improved DOA
estimation method by distinction of different
transmit signals in automotive MIMO frequency-
modulated continuous wave radar systems", IET
RADAR SONAR NAVIGATION, THE INSTITUTION
OF ENGINEERING AND TECHNOLOGY, UK, vol.
14, no. 8, 1 August 2020 (2020-08-01), pages 1135
- 1142, XP006091485, ISSN: 1751-8784, DOI:
10.1049/IET-RSN.2019.0634**
• **PENG CHEN ET AL: "Off-Grid DOA Estimation
Using Sparse Bayesian Learning in MIMO Radar
With Unknown Mutual Coupling", ARXIV.ORG,
CORNELL UNIVERSITY LIBRARY, 201 OLIN
LIBRARY CORNELL UNIVERSITY ITHACA, NY
14853, 12 April 2018 (2018-04-12), XP081431859,
DOI: 10.1109/TSP.2018.2881663**

## Description

### Field

The present disclosure relates to an apparatus and method for determining the directions of arrival angles for each of a plurality of targets in a dataset indicative of radar signals received at an antenna array. The disclosure also relates to a frequency-modulated-continuous-wave, FMCW, radar system configured to perform said method.

### Background

Deterministic Maximum-Likelihood (DML) Direction-of-Arrival (DoA) estimation is a technique for determination of the directions of arrival angles of component radar signals reflected from each of a plurality of targets in radar signals received at a plurality of antenna elements. The antenna elements may be part of a FMCW radar.

The article "Improved DOA estimation method by distinction of different transmit signals in automotive MIMO frequency-modulated continuous wave radar systems", written by Heonkyo Sim et al. and published in IET Radar, Sonar & Navigation (ISSN 1751-8784), 2020, describes an advanced direction-of-arrival (DOA) estimation method for automotive multiple-input multiple-output (MIMO) fast-ramp radar systems.

JP 2020 003333 A describes an arrival direction estimation technology with which it is possible to estimate the arrival direction of a radio wave accurately to some extent even when abnormality occurs to a receive antenna.

The article "Off-Grid DOA Estimation Using Sparse Bayesian Learning in MIMO Radar With Unknown Mutual Coupling", written by Peng Chen et al. and published in IEEE Transactions on Signal Processing (Volume: 67, Issue: 1, January 2019), investigates the problem of estimating the direction of arrival (DOA) in a multiple-input and multiple-output (MIMO) radar system with unknown mutual coupling effect between antennas.

### Summary

According to an aspect of the disclosure we provide an apparatus comprising a processor configured to:

receive an input dataset, x, indicative of radar signals received at a plurality of antenna elements, wherein the radar signals have reflected from a plurality of targets;
define a matrix, $\tilde{A}$, formed of direction-of-arrival-angle vectors, $\underline{\tilde{a}}_n$, comprising one for each one of the plurality of targets, each direction-of-arrival-angle vector representing an expected response at the plurality of antenna elements of the radar signals from the target with a predetermined amplitude and comprising a function of a direction of arrival angle relative to the plurality of antenna elements and including antenna-imperfection-factors, $q_p$, one for each of the plurality of antenna elements, that represent the direction-of-arrival-angle dependent effect of antenna imperfections;
define an objective function based on x and $\tilde{A}$;
search for a set of the direction of arrival angles for each of the plurality of targets by the repeated evaluation of the objective function for a plurality of candidate matrices based on matrix $\tilde{A}$ that each include different direction-of-arrival-angle vectors over a search space, wherein said set of direction of arrival angles are derived from one of the candidate matrices of the plurality of candidate matrices that provides one of a maximum and a minimum evaluation of the objective function over the search space; and
wherein said search space comprises a plurality of discrete points associated with the direction of arrival angle.

In one or more embodiments, the antenna-imperfection-factors, $q_p$, comprise: $q_p = g_p(\theta_n)e^{jh_p(\theta n)}$ wherein $g_p(\theta_n)$ represents an angle dependent gain error caused by the antenna imperfections and $h_p(\theta_n)$ represents an angle dependent phase error caused by the antenna imperfections and wherein n designates an index to step through the direction of arrival angles of the search space and wherein p comprises an index that designates each of the N antenna elements. In one or more examples, each direction-of-arrival-angle vector of the matrix $\tilde{A}$ includes one of said antenna-imperfection-factors to account for antenna imperfections for each one of the plurality of antenna elements.

In one or more embodiments, the apparatus is configured to, prior to said search for the set of direction of arrival angles, determine a first look up table, said first look up table providing an association between each of the plurality of discrete points of the search space and a function $\tilde{F}_k$, wherein $\tilde{F}_k = \underline{\tilde{a}}^H(\theta_k)\underline{x}$ and $\underline{\tilde{a}}^H(\theta_k)$ comprises a Hermitian transpose of the direction-of-arrival-angle vector, $\tilde{a}$, for a candidate direction of arrival angle $\theta_k$ having index k; and
wherein said search comprises a step of retrieving $\tilde{F}_k$ from the look up table for each of the targets being evaluated for evaluating the objective function, wherein the objective function is based on the expression, $\tilde{f}$:

$$\tilde{f} = \left(\tilde{A}^H\underline{x}\right)^H\left(\tilde{A}^H\tilde{A}\right)^{-1}\left(\tilde{A}^H\underline{x}\right)$$

**EP 4 184 207 B1**

and $\tilde{F}_k$ comprises part of the evaluation of the term $(\tilde{A}^H\underline{x})$ of said expression, $\tilde{f}$.

In one or more embodiments, the apparatus is configured to determine $\tilde{F}_k$ by performing a correlation comprising calculating an inner product between direction-of-arrival-angle vector, $\underline{\tilde{a}}$, and the input dataset, $\underline{x}$, to obtain a complex value expression, wherein the first look up table comprises the evaluation of the complex value expression over the search space.

In one or more embodiments, the apparatus is configured to perform said correlation by calculation of dot products.

In one or more embodiments, the direction-of-arrival-angle vectors are of the form:

$$\underline{\tilde{a}}_k^T = \left( q_1 e^{j\,2\pi(d_1/\lambda)\sin\theta_k},\ q_2 e^{j\,2\pi(d_2/\lambda)\sin\theta_k},\ \dots, q_N e^{j\,2\pi(d_N/\lambda)\sin\theta_k} \right)$$

for index k and the antenna-imperfection-factors are represented by $q_p$ wherein p comprises an index for the plurality of antenna elements.

In one or more embodiments, the apparatus is configured to, prior to said search for the set of direction of arrival angles, determine a second look up table, said second look up table providing an evaluation of $\tilde{\alpha}_{k,n} = (\underline{\tilde{a}}^H(\theta_k)\underline{\tilde{a}}(\theta_n))/N$ wherein $\underline{\tilde{a}}^H(\theta_k)$ comprises a Hermitian transpose of the direction-of-arrival-angle vector for candidate direction of arrival angle $\theta_k$, and $\underline{\tilde{a}}(\theta_n)$ comprises the direction-of-arrival-angle vector for a candidate direction of arrival angle $\theta_n$, wherein k represents an index for each of the discrete points of the search space for a first target of the plurality of targets and n represents an index for each of the discrete points of the search space for a second target of the plurality of targets; and wherein said search comprises a step of retrieving $\tilde{\alpha}_{k,n}$ from the second look up table for evaluating the objective function, wherein the objective function is based on the expression, $\tilde{f}$:

$$\tilde{f} = \left(\tilde{A}^H\underline{x}\right)^H\left(\tilde{A}^H\tilde{A}\right)^{-1}\left(\tilde{A}^H\underline{x}\right)$$

and wherein the term $(\tilde{A}^H\tilde{A})^{-1}$ is determined based on:

$$\left(\tilde{A}^H\tilde{A}\right)^{-1} = \frac{1}{N\left(\tilde{\alpha}_{k,k}\tilde{\alpha}_{n,n} - |\tilde{\alpha}_{k,n}|^2\right)}\begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix}.$$

In one or more embodiments, the apparatus is configured to determine the second look up table based on the properties $\tilde{\alpha}_{k,n} = (\tilde{\alpha}_{n,k})^*$, such that the second look up table size for $\tilde{\alpha}_{k,n}$ is $\frac{1}{2}N_\theta(N_\theta-1)$, wherein $N_\theta$ designates the number of discrete points in the search space.

In one or more embodiments, the objective function $\tilde{f}$ is based on $\tilde{f} = (\tilde{A}^H\underline{x})^H(\tilde{A}^H\tilde{A})^{-1}(\tilde{A}^H\underline{x})$.

In one or more embodiments, the objective function $\tilde{f}$ comprises

$$\tilde{f} = \frac{1}{N\left(\tilde{\alpha}_{k,k}\,\tilde{\alpha}_{n,n} - |\tilde{\alpha}_{k,n}|^2\right)}\left( |\tilde{F}_k|^2 - 2\,Re\left\{\tilde{\alpha}_{k,n}\tilde{F}_k\tilde{F}_n^*\right\} + |\tilde{F}_n|^2 \right)$$

wherein $\tilde{F}_k = \underline{\tilde{a}}^H(\theta_k)\underline{x}$ and $\tilde{F}_n = \underline{\tilde{a}}^H(\theta_k)\underline{x}$, and $\tilde{\alpha}_{k,n} = (\underline{\tilde{a}}^H(\theta_k)\underline{\tilde{a}}(\theta_k))/N$, and $\tilde{\alpha}_{k,k} = (\underline{\tilde{a}}^H(\theta_k)\,\underline{\tilde{a}}(\theta_k))/N$, and $\tilde{a}_{n,n} = (\underline{\tilde{a}}^H(\theta_n)\,\underline{\tilde{a}}(\theta_k))/N$.

In one or more embodiments, the apparatus is configured to account for noise by application of a factor $\Lambda^{1/2}\phi^T$ to the matrix $\tilde{A}$ wherein $\Lambda$ is a diagonal matrix representing the spatial colouring comprising the variance of each noise component, and $\phi$ is the correlation between the noise components, such that the noise covariance matrix is $\Sigma = \Lambda\phi\Lambda^{-1}$; wherein

the apparatus being configured to define the objective function comprises the apparatus being configured to define the objective function based on x and $\Lambda^{1/2}\phi^T\tilde{A}$.

In one or more embodiments, the apparatus is configured to account for antenna coupling effects by application of a matrix $M(\theta)$ to the matrix $\tilde{A}$ wherein matrix $M(\theta)$ is a predetermined matrix that is indicative of the effect the excitation of one of the plurality of antenna element will have on the signal measured with another of the plurality of antenna elements; and

wherein the apparatus being configured to define the objective function comprises the apparatus being configured to define the objective function based on x and $M(\theta).\tilde{A}$.

In one or more embodiments, the apparatus includes a Range-Doppler processing module configured to separate antenna data into one or more datasets, each dataset representative of one or more targets and each dataset, relative to others of the one or more datasets, being representative of one or both of:

different ranges from the antenna elements; and

3

different radial velocities relative to the antenna elements; wherein the antenna data comprises radar signals received at the plurality of antenna elements that have reflected from the plurality of targets, and wherein the input dataset, x, comprises one of said one or more datasets separated by the Range-Doppler processing module.

In one or more embodiments, the apparatus comprises a frequency-modulated-continuous-wave, FMCW, radar system.

In one or more examples, said plurality of antenna elements are provided by a microstrip antenna. Thus, in one or more examples, said antenna elements may be formed by photolithographic techniques on a substrate.

According to a second aspect of the disclosure we provide a method for determining the directions of arrival angles for each of a plurality of targets K in radar signals comprising:

receiving an input dataset, $\underline{x}$, indicative of radar signals received at a plurality of antenna elements wherein the radar signals have reflected from a plurality of targets;

defining a matrix, $\tilde{A}$, formed of direction-of-arrival-angle vectors, $\underline{\tilde{a}}_n$, comprising one for each one of the plurality of targets, each direction-of-arrival-angle vector representing an expected response at the plurality of antenna elements of the radar signals from the target with a predetermined amplitude and comprising a function of the direction of arrival angle relative to the plurality of antenna elements and including antenna-imperfection-factors, $q_p$, one for each of the plurality of antenna elements, that represent the direction-of-arrival-angle dependent effect of antenna imperfections;

defining an objective function based on $\underline{x}$ and $\tilde{A}$;

searching for a set of directions of arrival angles for each of the plurality of targets by the repeated evaluation of the objective function for a plurality of candidate matrices based on matrix $\tilde{A}$ that each include different direction-of-arrival-angle vectors over a search space, wherein said set of directions of arrival angles are derived from one of the candidate matrices of the plurality of candidate matrices that provides one of a maximum and minimum evaluation of the objective function over the search space; and

wherein said search space comprises a plurality of discrete points associated with the direction of arrival angles.

According to an aspect of the disclosure we provide a computer program product, such as a non-transitory computer program product comprising computer program code which, when executed by a processor of an apparatus causes the apparatus to perform the method of the second aspect.

In one or more examples, the apparatus may comprise at least one processor and at least one memory, wherein the memory stores the computer program and the processor is configured to execute said computer program.

While the disclosure is amenable to various modifications and alternative forms, specifics thereof have been shown by way of example in the drawings and will be described in detail. It should be understood, however, that other embodiments, beyond the particular embodiments described, are possible as well. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

Figure 1 shows an example embodiment of an apparatus and a FMCW system;

Figure 2 shows an example embodiment of a pair of antenna elements illustrating a direction of arrival angle;

Figure 3 shows an example embodiment of a plurality of antenna elements, wherein the antenna elements may be true antenna elements or virtual antenna elements or a combination;

Figure 4 shows an example computer readable medium; and

Figure 5 shows an example flowchart illustrating a method.

## Detailed Description

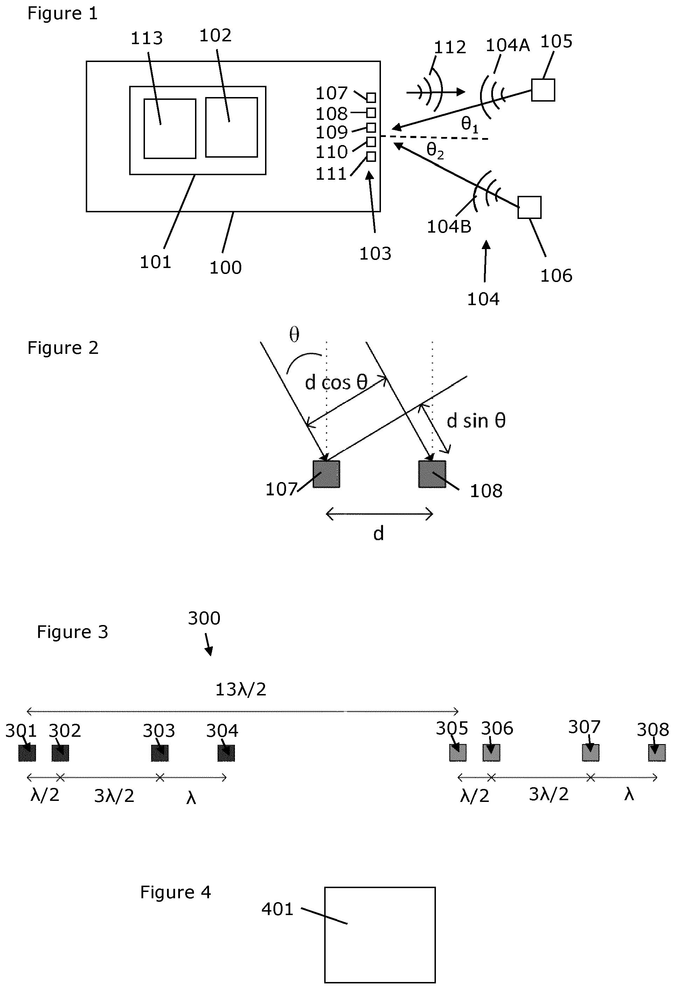

Figure 1 shows an example embodiment of a FMCW system 100. The system comprises an apparatus 101, which may comprise a processor 102, for processing data indicative of radar signals 104 received by an antenna array 103. The radar signals 104 may comprise reflections from one or a plurality of targets 105, 106.

The antenna array 103 comprises a plurality of antenna elements 107-111. One or more of the antenna elements may be configured to transmit radar signals, which may comprise a FMCW chirp 112, that will reflect from the targets 105, 106. Two or more of the antenna elements 107-111 may be configured to receive the reflected radar signals 104A, 104B from the targets 105, 106. The antenna array 103 may be formed as a microstrip antenna and may therefore be printed on a substrate. In some examples, microstrip antennas are straightforward to manufacture but are known to exhibit imperfections in their phase and gain curves. However, it will be appreciated that the present method can account for imperfections that cause discrepancies in the measurement of direction-of-arrival angle using other antenna types.

FMCW radar has many applications and may be used in the automotive field to detect targets in the neighbourhood of the vehicle with the objective to make driving safer and more comfortable. Distance to the target(s) 105, 106 and the relative velocity of the target(s) can be estimated. The use of several antenna elements 107-111 to transmit and receive radar signals allows for the direction in which this target is present to be determined and it is typically represented as an angle relative to a direction of the antenna elements.

The reflected radar signal 104A from the first target 105 has a direction of arrival angle of $\theta_1$ at the antenna elements 107-111. The reflected radar signal 104B from the second target 106 has a direction of arrival angle $\theta_2$ at the antenna elements 107-111. However, the radar signals 104 as received by the antenna elements 107-111 comprises a combination of the signals 104A and 104B and noise. It will also be appreciated that the direction of arrival angle may represent the angle of arrival of the reflected radar signals 104A, 104B in one or both of an azimuth angle and an elevation angle.

Accordingly, it is necessary to processes the received radar signals to determine, optionally, the number of targets (if not known or otherwise determined) and the direction of arrival angles $\theta_k$, which in this example comprise $\theta_1$ and $\theta_2$.

Deterministic Maximum-Likelihood (DML) Direction-of-Arrival (DoA) estimation is a known process for determining the most likely (including likely) angles from which the radar signals 104A, 104B are received to create the observed combination of radar signals 104 as received by the antenna elements 107-111.

The transmitted radar signals are reflected by the target(s) 105, 106 and received by the receive antenna elements of the radar system 100 and, depending on the direction of arrival angle of the reflected wave(s) $\theta_1$ and $\theta_2$, different pathlengths between transmit antenna element, targets 105, 106 and receive antenna elements are realised, leading to phase differences and amplitude differences in the received radar signals between the antenna elements. Analysis of these amplitude and phase differences is carried out to estimate the direction of arrival angle of the target(s).

Direction of arrival angle estimation based on data from the antenna array 103 is an important matter for radar systems 100. If the radar signals received originate from one target 105, the signal strength at the antenna elements 107-111 is identical but due to path length differences between antenna elements 107-111 and target 105 the phase of the radar signal will be different and is a function of the direction of arrival angle.

The use of microstrip antennas may introduce limitations in terms of achievable resolution and maximum allowable power-difference between targets when using the DML DoA estimation technique, as well as other DoA estimation techniques. These limitations may become even more pronounced when there are more than two targets that need to be detected. This could, in practical systems, limit the maximum number of directions-of-arrival that can be estimated to only two. Further, the DML technique, as well as other DoA estimation techniques, may only be effective if the targets have a reflected power difference of at most 10 dB.

Compensation of the imperfections is highly desirable but is complicated by the fact that the effect of the imperfections in the data received from the antenna array is DoA dependent. Therefore, the compensation that should be applied is unknown before the DoA is estimated, but accurate DoA estimation requires that compensation has already been applied. The apparatus and methods described in one or more examples, are configured to compensate for the imperfections as part of the DoA determination algorithm rather than by pre-processing, which may therefore reduce the complexity of the processing.

Figure 2 shows two example antenna elements, which may comprise antenna elements 107 and 108 receiving the radar signal 104A. The path length difference is given by $d\sin\theta$ where $d$ is the antenna element spacing and $\theta$ is the direction-of-arrival angle.

When multiple targets 105, 106 are reflecting, a linear combination of these signals will be received. Because of the linear combination, both the amplitude and the phase per antenna element 107-111 will vary and has to be used to estimate the DoA angles of the targets 105, 106.

In practice the number of targets 105, 106 is unknown and has to be estimated as well. In one or more examples, data from the antenna array 103 can be pre-processed to analyse the space in which the targets are located.

Using radar signals, such as FMCW radar signals, one can use the known technique of Range-Doppler processing to quantize the received signal in Range and Doppler shift. For each Range-Doppler combination for which one has detected energy (above a threshold), one can carry out the DoA estimation. The Range-Doppler pre-processing separates targets on the basis of their distance from the antenna array 103 and their velocity (Doppler) and therefore the number of targets per Range-Doppler bin are expected to be low. The properties of the FMCW signal determine how fine the radar scene is quantized in Range and Doppler. With an appropriate designed radar system it is reasonable to assume that having one target present in the radar data of one Range-Doppler bin is more likely than having two present in the radar data of one Range-Doppler bin, and 2 targets more likely than 3 targets etc. In one or more examples, therefore, an algorithm to solve the DoA problem may therefore start with searching first for only one target, then for two targets, then for three targets, etc. When each of these searches indicates how well the found candidate DoA's match with the received radar data signals then one can stop searching for more targets if the match with the received signal is sufficiently close (e.g. above a threshold level of confidence). Noise in the radar system is a reason why an exact match is unlikely to happen. Since noise power is estimated in radar systems, a threshold may be derived to evaluate the match.

Deterministic Maximum Likelihood DoA estimation is a technique that for a given number of targets can determine what the most likely DoA angles are and what their match is to the received radar signal. In one or more examples, the DML algorithm may be configured to find the DoA angles that maximizes the match with the received radar data. In case a K-target search with DML finds a match that is too poor (e.g. below a threshold level of a match) on the basis of the known noise properties, then one proceeds with a (K+1)-target search with DML. A DML search for (K+1) targets is more complex than a search for K targets. Therefore, in a practical implementation one has to stop after a certain K because of limitations in computing resources to search for more targets. Moreover, system imperfections (amplitude and phase distortions, noise) also limits the number of targets one successfully can estimate. In one or more examples a practical value for K is therefore from 1 to 2 or 1 to 3 or 1 to 4 or 1 to 5 potential targets.

DoA estimation may be carried out for each Range-Doppler bin for which sufficient energy is detected. In a rich radar scene this means that DoA estimation may have to be carried out many times within a system cycle. For that reason it is important that the corresponding complexity of the DoA estimation process is low.

DoA estimation starts with the radar signals received at the antenna elements or, more particularly, the data representing the reflected radar signals received at the antenna elements 107-111. These signals can be represented collectively with an N-dimensional vector $x = (x_1, ..., x_N)^T$, which is often called a snapshot, and wherein T stands for transpose, such that x is a column vector. The snapshot thereby represents the received signals at a particular point in time at the antenna elements of the antenna array and may have been Range-Doppler processed, as will be described below. The number of antenna elements is N. During a system cycle, radar signals received by the apparatus 101 may comprise data representative of the received signals at each of the antenna elements 107-111. In one or more examples, during a system cycle, radar signals received by the apparatus may comprise snapshots extracted from one or more Range-Doppler bins. In one or more examples, DoA estimation may be carried out only for those Range-Doppler bins that contain radar signals having an energy above a certain threshold. Thus, the following process can be performed on the data whether or not Range-Doppler processing has been performed.

A signal received from a target at DoA angle $\theta_1$ will result in a response at the antenna elements 107-111. That response has constant amplitude and a phase relation between the antenna elements that is specific for the DoA angle $\theta_1$ and the relative positions of the antenna elements 107-111. The response can be denoted with a vector: $\underline{a}_1 = \underline{a}(\theta_1)$. When at least two antenna elements have a distance $\leq \lambda/2$, and the DoA angle $\theta$ may be between -90 and 90 degrees, any two single target responses will be different and therefore the DoA angle of a single target response can be unambiguously determined. For multiple, say K targets, the antenna response will be a linear combination of K single target responses, i.e.

$$\underline{x} = \sum_{k=1}^{K} s_k \, \underline{a}_k + \underline{n},$$

where $\underline{n}$ represents additive noise, and $s_k$ represent the complex amplitude of the targets and $\underline{x}$ represents an input dataset representing the radar signals received at the antenna elements 107-111, and $\underline{a}_k$ comprises a vector and comprises a function of the DoA, wherein

$$\underline{a}_k^T = (e^{j\,2\pi(d_1/\lambda)\sin\theta_k}, \, e^{j\,2\pi(d_2/\lambda)\sin\theta_k}, \, ..., e^{j\,2\pi(d_N/\lambda)\sin\theta_k})$$

and $(d_1,...,d_N)$ are the relative positions of the antenna elements or virtual antenna elements. The vector $\underline{a}_k$ carries the relative phase behaviour among the antenna elements due to pathlength difference of a planar wave originating from an angle $\theta_k$. However, this representation of $\underline{a}_k$ does not account for phase and gain deviations caused by antenna imperfections.

Figure 3 shows an example microstrip antenna array 300 with antenna elements 301-308 separated by distances d of different fractions of the operating wavelength. For example, the antenna array 300 may be configured to operate according to a MIMO scheme for which the positions of the two virtual antenna elements 301, 305 are indicative of the positions of the transmitters and are separated by 13 $\lambda/2$, and the virtual antenna elements 301, 302, 303, 303 are indicative of the receive array with antenna spacing (0, 1, 4, 6)$\lambda/2$, that in this specific example forms a Minimum Redundancy Array. Together they form a virtual antenna array with relative element positions $(d_1,...,d_8) = (0, 1, 4, 6, 13, 14, 17, 19)\lambda/2$. Thus, in one or more examples, the antenna array 300 may comprise a combination of true and virtual antenna elements depending on the configuration of the antenna array. In other examples, the antenna array 300 may comprise all true antenna elements, i.e. the scenario in which the radar system will use one transmitter 301 antenna and eight receive antennas 301-308. Thus, the term antenna element can refer to true (real) antenna elements as well as virtual antenna elements.

The processing performed by the apparatus is based on the aforementioned input dataset. The input dataset may be from a Range-Doppler bin if the optional Range-Doppler processing is performed.

A more formal way to describe the linear combination of K single target responses is: x = $\mathbf{A}\underline{s}$ + $\underline{n}$, where $\underline{s}$ collectively contains the K complex amplitudes $s_k$ of the targets, $\underline{n}$ represents additive noise, and the matrix $\mathbf{A}$ contains the K single target responses $\underline{a}_k$, for k=1,..., K.

For Additive White Gaussian Noise (AWGN), it is known that the K-target DML estimation can be summarized for finding the value of $\underline{s}$ and the matrix $\mathbf{A}$ that minimizes:

$$Q = \left\| \underline{x} - \mathbf{A}\underline{s} \right\|_2^2$$

The value for $\underline{s}$ and the matrix $\mathbf{A}$ that minimizes Q, are called the maximum likelihood (ML) solutions. Wherein $\| \ \|_2^2$ represents a square of a 2-norm. For the DoA estimation problem, $\underline{s}$ is a side-product and the matrix $\mathbf{A}$ is the main output because its columns $\underline{a}$ can be uniquely linked to DoA angles $\theta$.

This indicates that we rely on that linear superposition of the radar signals of the individual sources. This linear superposition principle is presumed to hold if imperfections are present and that therefore, imperfections are applied per source according to this model. Therefore, the imperfections can be included by replacing the matrix $\mathbf{A}$ with a matrix $\tilde{A}(\theta)$ in which the gain and phase imperfections are accounted for. Thus, $\tilde{A}(\theta)$ may include additional terms that account for antenna imperfections. Accordingly, the objective function that accounts for the antenna imperfections can be designated $\tilde{Q}$, rather than Q, and may be represented as follows:

$$\tilde{Q} = \left\| \underline{x} - \tilde{A}\underline{s} \right\|_2^2$$

Wherein $\| \ \|_2^2$ represents a square of a 2-norm.

Before we describe the methodology associated with the objective function $\tilde{Q}$, a general description of DML-DoA determination will be provided followed by embodiments of the processing that the example embodiment apparatus 100 is configured to perform.

Instead of jointly searching for the most likely $\underline{s}$ and the matrix $\mathbf{A}$, an intermediate step may be carried out such that the search can be confined to the search for the most likely matrix $\mathbf{A}$.

To simplify the search, it can be assumed that if one knows what the matrix $\mathbf{A}$ is, then given $\mathbf{A}$ and antenna response x then one can determine which value of $\underline{s}$ minimizes $Q = \left\| \underline{x} - \mathbf{A}\underline{s} \right\|_2^2$. This is a mean-square error problem and its least square solution is given by $\hat{\underline{s}} = (\mathbf{A}^H\mathbf{A})^{-1}\mathbf{A}^H\underline{x}$, where superscript H means complex conjugate transpose. The matrix $(\mathbf{A}^H\mathbf{A})^{-1}\mathbf{A}^H$ is also known as the pseudoinverse or Moore-Penrose inverse and is then denoted by $\mathbf{A}^+$. To complete the simplification, the solution is substituted back into the expression for Q:

$$Q = \underline{x}^H(I - A(A^HA)^{-1}A^H)\underline{x} = \underline{x}^H\underline{x} - \underline{x}^H(A(A^HA)^{-1}A^H)\underline{x}.$$

Hence, the K-target DML problem becomes the problem of finding the K-column matrix $\mathbf{A}$ that minimizes Q. The term $\underline{x}^H\underline{x}$ in the expression for Q stays constant for a given received antenna response, that is the input dataset $\underline{x}$, and can therefore be omitted in the search for the most likely matrix $\mathbf{A}$.

Instead of minimizing Q, one can equivalently perform a search with the aim of maximizing f, wherein:

$$f = \underline{x}^H(A(A^HA)^{-1}A^H)\underline{x}.$$

f is therefore an alternative objective function (rather than Q) of the search for $\mathbf{A}$.

f as a function of $\mathbf{A}$ for a given antenna response x has many local maxima. The search for the most likely matrix $\mathbf{A}$, i.e. the one that maximizes f, may or may not be performed exhaustively.

Also, if we define B as B = $(\mathbf{A}^H\mathbf{A})^{-1}$, and $\underline{y}=\mathbf{A}^H\underline{x}$ so $\underline{y}^H=x^H\mathbf{A}$, f can be simplified to:

$$f = \underline{x}^H(A(A^HA)^{-1}A^H)\underline{x} = \underline{y}^H(A^HA)^{-1}\underline{y} = \underline{y}^HB\underline{y}$$

At this point let us define D as ($A^HA$), such that B= $(\mathbf{A}^H\mathbf{A})^{-1}$ = $D^{-1}$.

With $F_k = \underline{a}_k^H \underline{x}$, which comprises a steering vector correlated with the snapshot, we have for y:

$$\underline{y} = \begin{bmatrix} F_k \\ F_n \end{bmatrix}$$

Another practical point of attention is that the DoA angles that lead to the formation of matrix **A** can have any value between -90 and 90 degrees. To limit the search space, the DoA search space may be quantized into $N_\theta$ discrete points in the range <-90,90> degrees. Hence per target we consider $N_\theta$ DoA angles.

A further simplification to the search may be performed. In particular, to further reduce the search space one has to realize that the function f is symmetric, i.e. for K=2 targets, the evaluation of the DML objective function f with **A** = [$\underline{a}(\theta_1)$ $\underline{a}(\theta_2)$] provides the same result as using **A** = [$\underline{a}(\theta_2)$ $\underline{a}(\theta_1)$]. Therefore, one can reduce the search space for K=2, with roughly a factor 2 without sacrificing the finding of the maximum. In general, for K targets, the search space can be limited to size $N_K = \binom{N_\theta}{K}$. As an example, for $N_\theta$=256 and a search for K=2 targets, the search space has an approximate size of $2^{15} = 32768$. Hence, the DML objective function f has to be evaluated $N_K$ times in order to find the K DoA angles that maximizes f.

As an example of a general DML algorithm, we provide the following summary:

- for n=1:$N_K$,

  o select $\theta_1$, $\theta_2$, ..., $\theta_k$ from DoA search space
  o form matrix **A** = [$\underline{a}(\theta_1)$ $\underline{a}(\theta_2)$ ... $\underline{a}(\theta_K)$], matrix has K columns and N rows
  o Calculate **A**$^H$**A**, where H means complex conjugate transpose (Hermitian). The result is a KxK matrix
  o Determine **B** = (**A**$^H$**A**)$^{-1}$, i.e. the inverse of **A**$^H$**A**
  o Premultiply **B** with A and postmultiply with **A**$^H$:
  **ABA**$^H$ = **A** (**A**$^H$**A**)$^{-1}$ **A**$^H$, this is an NxN matrix
  o Use the antenna response input dataset $\underline{x}$ to calculate $f = \underline{x}^H$ (**A**(**A**$^H$**A**)$^{-1}$**A**$^H$)$\underline{x}$
  o During search keep track of maximum f so far and the corresponding DoA angles

- End

The general DML algorithm suffers from a lot of intensive matrix operations per evaluation of the DML objective function for each point in the search space. Thus, with the DML process formulated as matrix algebra and with the use of a reasonably dense search space, it is clear that the process is computationally intensive.

In the summary above, the K-dimensional search is represented as a linear search. It will apparent to those skilled in the art that the K-dimensional search can also be represented as K nested for-loops. The matrix operations that makes DML computationally intensive would be carried out in the inner for-loop. The search space associated with the K nested for-loops has the same size as the linear search shown in the summary above, i.e. the search space has size $N_k$. In one or more examples, the complexity of the inner loop of the algorithm can be reduced if one confines to K=2 targets.

In one or more examples, the following known method may be performed to reduce the number of matrix operations in the inner loop. In this example, the same objective function f is calculated for all points in the direction-of-arrival search space, but the calculations are organized in a different way.

Firstly, it is observed that the DML objective function without loss of generality can be rewritten as $f = (\underline{x}^H A)(A^H A)^{-1}(A^H \underline{x}) = (A^H \underline{x})(A^H A)^{-1}(A^H \underline{x})$.

Secondly it is observed that the $A^H \underline{x}$ is the correlation of the antenna response input dataset x with the complex conjugate of K single target responses, i.e.

$$A^H \underline{x} = \left( \underline{a}^H(\theta_1) \underline{x}, \underline{a}^H(\theta_2) \underline{x}, \ldots, \underline{a}^H(\theta_K) \underline{x} \right)^T.$$

Thirdly, for K=2, the matrix **B** = (**A**$^H$**A**)$^{-1}$ can be calculated symbolically such that no matrix inversion has to be carried out in the inner loop. With **A** = [$\underline{a}(\theta_k)$ $\underline{a}(\theta_n)$] one obtains

$$B = (A^H A)^{-1} = \frac{1}{N\left(1 - |\alpha_{k,n}|^2\right)} \begin{pmatrix} 1 & -\alpha_{k,n}^* \\ -\alpha_{k,n} & 1 \end{pmatrix},$$

where $\alpha_{k,n} = \frac{1}{N}\left(\underline{a}^H(\theta_k)\,\underline{a}(\theta_n)\right)$. Note this is an in-product between 2 single target responses and results in complex scalar. This equation however only holds for an ideal antenna i.e. without imperfections. Combining all aforementioned steps, one can summarize the general DML method as follows:

- For k=1:$N_\theta$

    o Select $\theta_k$, form $\underline{a}(\theta_k)$
    o For n=k+1:$N_\theta$,

        - Select $\theta_n$, form $\underline{a}(\theta_n)$
        - Calculate (or recall) $\alpha_{k,n} = (\underline{a}^H(\theta_k)\,\underline{a}(\theta_n))/N$
        - Calculate $F_k = \underline{a}^H(\theta_k)\,\underline{x}$ and $F_n = \underline{a}^H(\theta_n)\,\underline{x}$
        - Substitute the values for $\alpha_{k,n}$, $F_k$ and $F_n$ in the expression for the DML objective function.

        - $f = \dfrac{1}{N\left(1 - |\alpha_{k,n}|^2\right)}\left(|F_k|^2 - 2\,Re\left\{\alpha_{k,n}F_kF_n^*\right\} + |F_n|^2\right)$, where Re{} means the real part.

        - During search keep track of maximum f so far and the corresponding DoA angles

    o End

- End

It will be appreciated that in this example, the search may be decomposed into two nested for-loops. One for-loop for each of the two DoA angles $\theta_1$ and $\theta_2$ the search is looking to identify.

Embodiments of the inventive processes performed by the apparatus 100 will now be described. It will be appreciated that the method to reduce the number of (or remove) matrix operations in the inner loop are implemented in the processes described below. It will also be appreciated that the formulation of $\underline{s}$ and the quantization of the search space as described above are also applied to the processes described below.

As mentioned previously, the objective function that accounts for the antenna imperfections can be designated $\tilde{Q}$ and may be represented as follows:

$$\tilde{Q} = \left\|\underline{x} - \widetilde{A}\underline{s}\right\|_2^2$$

To summarise, the apparatus 101 comprising the processor 102 is configured to receive an input dataset, $\underline{x}$, indicative of radar signals, $x_1, ..., x_N$, received at a plurality of (real and/or virtual) antenna elements 107-111, 301-308, N, wherein the radar signals have reflected from a plurality of targets, namely K=2 targets 105, 106 in the example of figure 1. The input dataset may comprise a snapshot from a Range-Doppler bin after Range-Doppler processing has been performed. Otherwise the input dataset may be indicative of the radar signal received at the plurality of antenna elements 107-111, 301-308 without Range-Doppler processing. Thus, in one or more examples, the radar signals $x_1,...,x_N$ represent signals from N (i.e. virtual) antenna elements after Range Doppler processing. One such signal, say $x_n$, may be a complex value, wherein its amplitude $|x_n|$ may represent the energy of the radar signal by means of energy being linear with $|x_n|^2$. In one or more examples, Range-Doppler processing is done once per system cycle, hence the energy associated with $x_n$ may be the average for one system cycle and specific for one range, one Doppler value and one virtual antenna element. In one or more examples, only for those Range-Doppler values (the radar signals of the input dataset) for which sufficient energy is detected at the N antennas, the DoA estimation method described below is applied. It will be appreciated that determining "sufficient energy" may comprise a comparison to a threshold value. The threshold value may be set based on an assessment of noise in the radar signals.

The processor 102 is configured to define a matrix, $\tilde{A}$, formed of K vectors, $\underline{\tilde{a}}_n$, comprising one for each one of the plurality of targets 105, 106, each vector $\underline{\tilde{a}}$ representing an expected response of the target represented by the vector with a predetermined amplitude and comprising a function of the direction of arrival angle relative to the plurality of antenna elements and also including a factor representing the antenna imperfections. Thus, it will be appreciated that the expected response may be considered the "reference" response of a target at direction of arrival angle theta without noise, wherein such a "reference" response is represented with a vector, and the direction of arrival information is contained in the phase and wherein the vectors are considered to include amplitude variations and phase errors due to antenna imperfections. Further, in practice, the true response of a target at direction of arrival angle theta will be scaled version of the vector $\underline{\tilde{a}}$ and will be additionally corrupted by additive noise. It will be appreciated that the number (K) of vectors $\underline{\tilde{a}}$ may be known by way of predetermined information. In other examples, K may initially be assumed to be one, then two and so on up to a predetermined maximum number and a search for the vectors $\tilde{\underline{a}}_n$ may be performed for each assumed K.

Thus, the matrix Ã comprises component vectors $\tilde{\underline{a}}_n$ for each target and as mentioned above, each of the vectors $\tilde{\underline{a}}_n$ may be represented as follows, wherein the transpose of $a_n$ is given by

$$\tilde{\underline{a}}_n^T = \left(q_1 e^{j\,2\pi(d_1/\lambda)\sin\theta_n},\ q_2 e^{j\,2\pi(d_2/\lambda)\sin\theta_n},\ \ldots,\ q_N e^{j\,2\pi(d_N/\lambda)\sin\theta_n}\right)$$

With $q_p = g_p(\theta_n)e^{jh(\theta_n)}$ with $g_p(\theta_n)$ being an angle dependent gain error caused by the antenna imperfections and $h_p(\theta_n)$ being an angle dependent phase error caused by the antenna imperfections, p designating an index associated with stepping through the N antenna elements and wherein $d_1$, $d_2$ ... $d_N$ represents the relative positions of the antenna elements 107-111, 301-308 from a reference point. Thus, for example, the distance between a 1st and 2nd antenna element is $d_2$-$d_1$. Each vector of the matrix Ã includes a term $q_p$ to account for antenna imperfections.

The processor 102 is configured to define a signal amplitude vector $\underline{s}$ to represent expected complex amplitudes of each of the K targets as received in the radar signals. In one or more examples, the processor 102 is configured to define a noise vector representing noise present at the plurality of antenna that receive the radar signals. It will be appreciated that the definition of the noise vector is based on an assumption that we can model the system as having additive noise. The noise represented by the noise vector may be assumed to comprise Additive White Gaussian Noise.

The processor 102 is configured to define an objective function based on x, Ã and $\underline{s}$. As mentioned above the objective function may comprise:

$$\tilde{Q} = \left\| \underline{x} - \tilde{\boldsymbol{A}}\underline{s} \right\|_2^2,$$

which can be expressed in a variety of ways, including with the substitution of $\underline{\hat{s}}$ as defined above, which is an estimate of the signal source vector $\underline{s}$.

The processor 102 is configured to search for a set of directions of arrival angles, one for each of the K targets, by the repeated evaluation of the objective function for a candidate matrix Ã(θ) that include vectors that represent directions of arrival angles from the search space and the antenna imperfections, wherein said set of directions of arrival are derived from the candidate matrix A that provides a minimum evaluation of the objective function over the search space. It will be appreciated that a minimum evaluation of the objective function may be determined by a maximum evaluation of the objective function should it be expressed differently, although both achieve the same aim of finding a matrix Ã(θ) that sufficiently matches the input dataset x by virtue of the evaluation of the objective function reaching a minimum or maximum (depending on how it is expressed) or a value beyond a predetermined threshold. The definition of the search space determines which candidate values in the matrix A are evaluated in the search.

The determination of the objective function based on $\tilde{Q} = \left\| \underline{x} - \tilde{\boldsymbol{A}}\underline{s} \right\|_2^2$ will now be described in more detail.

As mentioned, the matrix Ã comprises column vectors $\tilde{\underline{a}}_k$, wherein

$$\tilde{A} = [\ \tilde{\underline{a}}_k\ \ldots\ \tilde{\underline{a}}_n\ ]$$

With

$$\tilde{\underline{a}}_n^T = \left(q_1 e^{j\,2\pi(d_1/\lambda)\sin\theta_n},\ q_2 e^{j\,2\pi(d_2/\lambda)\sin\theta_n},\ \ldots,\ q_N e^{j\,2\pi(d_N/\lambda)\sin\theta_n}\right)$$

for candidate angle index n, and antenna-imperfection-factors or coefficients $q_p$ wherein p designates an index for the antenna elements and shown here as $q_1$ through to $q_N$ for each of the N antenna elements.
Or

$$\tilde{\underline{a}}_k^T = \left(q_1 e^{j\,2\pi(d_1/\lambda)\sin\theta_k},\ q_2 e^{j\,2\pi(d_2/\lambda)\sin\theta_k},\ \ldots,\ q_N e^{j\,2\pi(d_N/\lambda)\sin\theta_k}\right)$$

for candidate angle index k, and antenna-imperfection-factors or coefficients $q_p$ wherein p designates an index for the antenna elements and shown here as $q_1$ through to $q_N$ for each of the N antenna elements.

The Hermitian matrix of Ã is ÃH which is defined below with $\tilde{\underline{a}}_k^H$ row vectors as:

$$\tilde{A}^H = \begin{bmatrix} \underline{\tilde{a}}_k^H \\ \underline{\tilde{a}}_n^H \end{bmatrix}$$

Let us define $\tilde{D} = \tilde{A}^H\tilde{A}$, as mentioned above, where the tilde indicates a function of $\tilde{A}$ rather than A.

Thus,

$$\tilde{B} = \tilde{D}^{-1} = \left(\tilde{A}^H\tilde{A}\right)^{-1} = \frac{1}{N\left(\tilde{\alpha}_{k,k}\tilde{\alpha}_{m,n} - |\tilde{\alpha}_{k,n}|^2\right)}\begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix},$$

It will be appreciated that a tilde indicates a function of $\tilde{A}$ (which includes the term q to account for antenna imperfections) rather than A (which assumes an ideal antenna).

A key difference with $\tilde{\alpha}_{k,n}$ compared to $\tilde{\alpha}_{k,n}$ is that $\tilde{\alpha}_{k,n}$ is different for all $k$ and $n$ whereas, in contrast, $\alpha_{k,n} = \alpha_{k\text{-}n}$.

As explained above, the determination of the direction-of-arrival angles involves the determination of $F_k$. In the present apparatus 100, this expression includes the component vectors $\underline{\tilde{a}}$ of the matrix $\tilde{A}$ and therefore the function is designated $\tilde{F}$, wherein $\tilde{F}_k = \underline{\tilde{a}}^H(\theta_k)\underline{x}$.

Further, as described above in relation to the prior method that does not account for antenna imperfections, the DML objective function, expressed previously as f, may be expressed as $\tilde{f}$ with changes made to the terminology to represent where the terms are based on $\tilde{A}$ rather than **A** as follows:

$$\tilde{f} = \frac{1}{N\left(\tilde{\alpha}_{k,k}\tilde{\alpha}_{n,n} - |\tilde{\alpha}_{k,n}|^2\right)}\left(|\tilde{F}_k|^2 - 2\,Re\left\{\tilde{\alpha}_{k,n}\tilde{F}_k\tilde{F}_n^*\right\} + |\tilde{F}_n|^2\right),$$

where Re{} means the real part

The calculation of $\tilde{F}_k = \underline{\tilde{a}}^H(\theta_k)\underline{x}$ and $\tilde{F}_n = \underline{\tilde{a}}^H(\theta_n)\underline{x}$ is essentially the "beam-forming" correlation result at angles $\theta_k$ and $\theta_n$ with indexes k and n. Therefore, $|F_k|^2$ and $|F_n|^2$ are equal to the values of the "beam-forming" spectrum evaluated at angles $\theta_k$ and $\theta_n$. The next observation is that the value $\tilde{\alpha}_{k,n} = (\underline{\tilde{a}}^H(\theta_k)\,\underline{\tilde{a}}(\theta_n))/N$ is an inner product (or dot product) between two "reference" single target responses. Therefore, the DML objective function can be regarded as the sum of single target beam-forming spectra values that are corrected with a value that represents mutual influence of single target responses at the total antenna array response. E.g. when $\tilde{\alpha}_{k,n} = 0$ (N.B. alpha$_{k,n}$), the single target responses are orthogonal and the DML objective function simply becomes $\tilde{f} = \frac{1}{N}\left(|\tilde{F}_k|^2 + |\tilde{F}_n|^2\right)$.

Also for K>2 targets, the evaluation of the DML objective function can be written as a part in which the contribution of K targets is accounted for independently and a second part in which the mutual influence of the K targets is accounted for. This mutual influence is then still described by the same $\tilde{\alpha}_{k,n}$. For example, for three targets k, m, n we have mutual influence $\tilde{\alpha}_{k,m}$, $\tilde{\alpha}_{k,n}$ and $\tilde{\alpha}_{m,n}$.

In one or more examples, the apparatus 101 is configured to, prior to said search for the set of directions of arrival angles, determine a first look up table, said look up table providing an association between each of the points in the search space (which relate to the plurality of discrete DoA angles) of the search space and a function $\tilde{F}_k$, wherein $\tilde{F}_k = \underline{\tilde{a}}^H(\theta_k)\underline{x}$ and $\underline{\tilde{a}}^H(\theta_k)$ comprises a Hermitian transpose of the vector $\underline{\tilde{a}}$ for target k for a candidate direction of arrival angle $\theta_k$; and wherein said search comprises a step of retrieving one or more $\tilde{F}_k$ values from the look up table for each of the targets being evaluated for evaluating an objective function that contains the expression:

$$\tilde{f} = \left(\tilde{A}^H\underline{x}\right)^H\left(\tilde{A}^H\tilde{A}\right)^{-1}\left(\tilde{A}^H\underline{x}\right)$$

and $\tilde{F}_k$ comprises part of the evaluation of the term $(\tilde{A}^H\underline{x})$ of said objective function, $\tilde{f}$.

Thus, as an example, in a two target evaluation, K=2, the apparatus 100 is configured to retrieve two values from the first look up table, say for candidate angle $\theta_k$, $\tilde{F}_k$ is retrieved and for the other candidate angle $\theta_n$, $\tilde{F}_n$ is retrieved (i.e. two candidates angles are jointly evaluated in expression, $\tilde{f}$, comprising one candidate angle for the 1st target and one candidate angle for the 2nd target. Thus, $(\tilde{F}_k, \tilde{F}_n)^T$ comprises the evaluation of the term $(\tilde{A}^H\underline{x})$. Hence it can be considered that $\tilde{F}_k$ comprises part of the evaluation of $(\tilde{A}^H\underline{x})$, and $\tilde{F}_n$ the other part of the evaluation of $(\tilde{A}^H\underline{x})$.

The first look up table thus provides an evaluation of the function $\tilde{F}_k$ for each Direction of Arrival angle $\theta$ associated with the search space. To summarize, in the search step for the best DoA angle, for each target we consider $N_\theta$ possible values for the DoA angle. For each of the $N_\theta$ DoA angles, one can determine a vector $\underline{\tilde{a}}$ that represents the "reference" (or normalized noise-less, but accounting for antenna imperfections) response for a single target from that DoA angle. The evaluation of the DML objective function requires (among more calculations) the evaluation of $(\tilde{A}^H\underline{x})$, where $\tilde{A}$ is constructed from K of these "reference" responses. The calculation of $(\tilde{A}^H\underline{x})$, for a given radar signal $\underline{x}$, can be determined for each of the $N_\theta$ candidate DoA angles. The $N_\theta$ calculations thus comprise the first look up table and, for example, the look up table will contain $N_\theta$ complex values, one complex value per candidate DoA angle.

In one or more examples, the first look up table also includes an evaluation of $|\tilde{F}_k|^2$ for each point in the search space.

In one or more examples, the apparatus 100 is configured to determine $\tilde{F}_k$ by performing a correlation comprising calculating an inner product between direction-of-arrival-angle vector $\underline{\tilde{a}}$ and the input dataset $\underline{x}$ to obtain a complex value expression, wherein the look up table comprises the evaluation of the complex value expression over the search space, that is for each discrete point in the search space.

In one or more examples, the apparatus 100 is configured to perform said correlation by use of $N_\Theta$ dot products.

In one or more examples, the apparatus 100 is configured to, prior to said search for the set of directions of arrival angles, determine a second look up table, said second look up table providing an association between each of the candidate direction of arrival angles based on the discrete points of the search space for a plurality of targets, K, and $\tilde{\alpha}_{k,n}$ wherein $\tilde{\alpha}_{k,n} = (\underline{\tilde{a}}^H(\theta_k)\underline{\tilde{a}}(_n))/N$ wherein $\underline{\tilde{a}}^H(\theta_k)$ comprises a Hermitian transpose of the vector $\underline{\tilde{a}}$ for a candidate direction of arrival angle $\theta_k$, $\underline{\tilde{a}}(\theta_n)$ comprises the vector for a different candidate direction of arrival angle $\theta_n$ for each target, wherein k and n represent indexes for stepping through the search space; and

wherein said search comprises a step of retrieving $\tilde{\alpha}_{k,n}$ from the look up table for evaluating an objective function that contains the expression:

$$\tilde{f} = \left(\tilde{A}^H\underline{x}\right)^H\left(\tilde{A}^H\tilde{A}\right)^{-1}\left(\tilde{A}^H\underline{x}\right)$$

and wherein the term $(\tilde{A}^H\tilde{A})^{-1}$ is determined based on

$$\left(\tilde{A}^H\tilde{A}\right)^{-1} = \frac{1}{N\left(\tilde{\alpha}_{k,k}\tilde{\alpha}_{n,n} - |\tilde{\alpha}_{k,n}|^2\right)}\begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix}$$

The above relates to a situation of searching for K=2 targets. In a search for K=3 targets, it will be appreciated a third index m will be involved and the apparatus will be configured to recall $\tilde{\alpha}_{k,m}$, $\tilde{\alpha}_{k,n}$ and $\tilde{\alpha}_{m,n}$ from a look up table.

In a search for K=3 targets, it will be appreciated that a third index m will be involved. The 3x3 matrix $(\tilde{A}^H\tilde{A})$ is then given by:

$$\left(\tilde{A}^H\tilde{A}\right) = N\begin{pmatrix} 1 & \tilde{\alpha}_{k,n}^* & \tilde{\alpha}_{k,m}^* \\ \tilde{\alpha}_{k,n} & 1 & \tilde{\alpha}_{n,m}^* \\ \tilde{\alpha}_{k,m} & \tilde{\alpha}_{n,m} & 1 \end{pmatrix}.$$

Accordingly, the matrix $\tilde{B} = (\tilde{A}^H\tilde{A})^{-1}$ can be computed and expressed in terms of $\tilde{\alpha}_{k,n}$, $\tilde{\alpha}_{k,m}$ and $\tilde{\alpha}_{m,n}$:

$$B = \frac{1}{N\left(1 - |\tilde{\alpha}_{k,n}|^2 - |\tilde{\alpha}_{m,n}|^2 - |\tilde{\alpha}_{k,m}|^2 + 2\,Re\{\tilde{\alpha}_{k,n}^*\tilde{\alpha}_{k,m}\tilde{\alpha}_{n,m}^*\}\right)} \cdot E$$

wherein

$$E = \begin{pmatrix} 1 - |\tilde{\alpha}_{n,m}|^2 & -\left(\tilde{\alpha}_{k,n}^* - \tilde{\alpha}_{k,m}^*\tilde{\alpha}_{n,m}\right) & -\left(\tilde{\alpha}_{k,m}^* - \tilde{\alpha}_{k,n}^*\tilde{\alpha}_{n,m}^*\right) \\ -\left(\tilde{\alpha}_{k,n} - \tilde{\alpha}_{k,m}\tilde{\alpha}_{n,m}^*\right) & 1 - |\tilde{\alpha}_{k,m}|^2 & -\left(\tilde{\alpha}_{n,m}^* - \tilde{\alpha}_{k,n}\tilde{\alpha}_{k,m}^*\right) \\ -\left(\tilde{\alpha}_{k,m} - \tilde{\alpha}_{k,n}\tilde{\alpha}_{n,m}\right) & -\left(\tilde{\alpha}_{n,m} - \tilde{\alpha}_{k,n}^*\tilde{\alpha}_{k,m}\right) & 1 - |\tilde{\alpha}_{k,n}|^2 \end{pmatrix}$$

The correlation of the antenna response x with the complex conjugate of K single target responses is given by:

$$\tilde{A}^H\underline{x} = \left(\underline{\tilde{a}}^H(\theta_k)\,\underline{x},\ \underline{\tilde{a}}^H(\theta_n)\,\underline{x},\ \underline{\tilde{a}}^H(\theta_m)\,\underline{x}\ \right)^T = \left(\tilde{F_k},\tilde{F}_n,\tilde{F}_m\right)^T$$

In one or more examples, the apparatus 100 is configured to provide the second look up table based on the

properties $\tilde{\alpha}_{k,n} = (\tilde{\alpha}_{n,k})^*$, such that the second look up table size for $\tilde{\alpha}_{k,n}$ is $\frac{1}{2}N_\theta(N_\theta+1)$, wherein $N_\theta$ designates the number of discrete points in the search space.

As mentioned above, Range-Doppler processing may or may not be performed to arrive at the input dataset. Accordingly, in one or more examples, the apparatus 101 includes a Range-Doppler processing module 113 configured to separate antenna data from the antenna elements 107-111, 301-308 into one or more datasets, at least one of the one or more datasets representative of one or more targets and each dataset, relative to others of the one or more datasets, being representative of one or both of:

  different ranges from the antenna elements; and

  different radial velocities relative to the antenna elements; wherein the antenna data comprises radar signals received at the plurality of antenna elements that have reflected from the plurality of targets, and wherein the input dataset, x, comprises one of said one or more datasets separated by the Range-Doppler processing module 113.

We now consider coloured noise and correlated noise. In the above example, the noise, n, was assumed to be uncorrelated and Gaussian distributed with the same variance. In one or more examples, the apparatus 100 may be configured to approximate the noise distribution with correlated coloured Gaussian distributed noise. In such one or more examples, the matrix $\tilde{A}$ is replaced with a matrix $\acute{A}$, wherein $\acute{A} = \Lambda^{1/2}\phi^T\tilde{A}$. In this equation, $\Lambda$ is a diagonal matrix describing the spatial colouring (variance of each noise component) and $\phi$ is the correlation between the noise components, such that the noise covariance matrix is $\Sigma = \Lambda\phi\Lambda^{-1}$, as will be familiar to those skilled in the art of whitening transformation.

We now consider antenna coupling effects. Antenna coupling is the effect that the excitation of one antenna will have an influence on the signal measured with another antenna because the EM-field is affected. There is also a parasitic capacitive coupling between antenna. The antenna coupling effects can be included in an angle dependent, antenna coupling matrix, which can be termed **M.**

In the case of N antenna elements, **M** is a NxN matrix, which can be dependent of DoA angle. The coupling effects (which can be considered leakage) can be represented with the inverse of the antenna coupling matrix (which has to be predetermined). In an ideal antenna there is no leakage and the antenna coupling matrix is the identity matrix. After undoing the coupling effect, one has caused correlation and colouring of the noise, but these can be compensated using a decorrelation matrix and a Gamma matrix (whitening matrix, has only diagonal elements).

The antenna coupling effects can be included in an angle dependent matrix M($\theta$) such that the snapshot $\underline{x}$ becomes $\underline{x} = M(\theta). \tilde{A}(\theta)s$. The coupling effects can be taken into account in the DML algorithm by defining $\check{A} = M(\theta). \tilde{A}(\theta)$ and then using $\check{A}$ instead of $\tilde{A}$ to compute the values in the second look up table of $\tilde{\alpha}_{k,n}$.

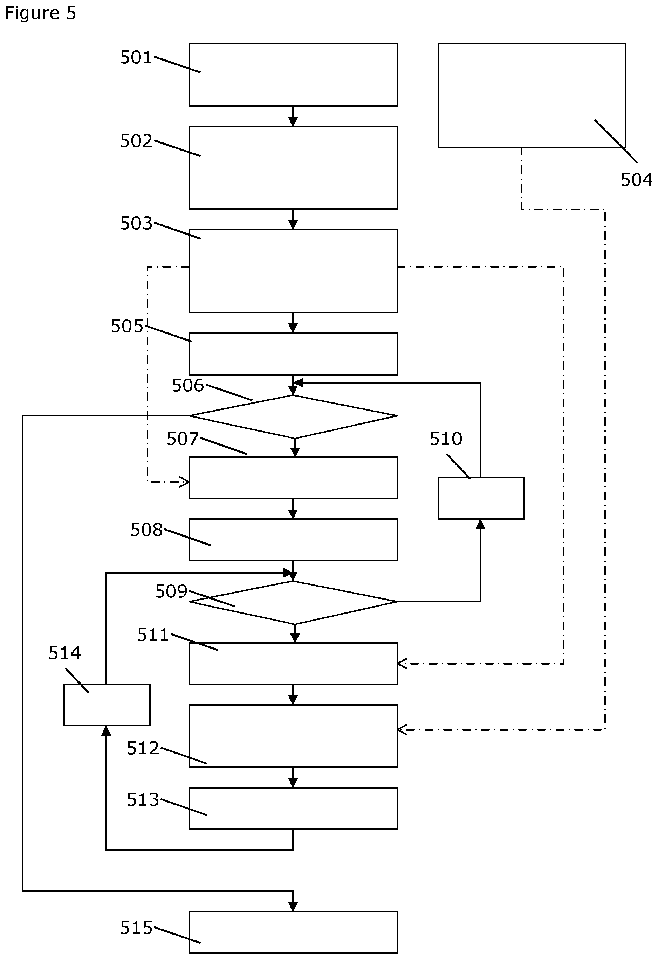

Figure 4 shows an example computer program product 401, such as a non-transitory computer program product, comprising computer program code which, when executed by the processor 102 of the apparatus 101 causes the apparatus 101 to perform the example method of the flowchart of figure 5.

With reference to Figure 5, the method generally comprises the steps of receiving 501 an input dataset, $\underline{x}$, indicative of radar signals, $x_1, ..., x_N$, received at the plurality of antenna elements, N, wherein the radar signals have reflected from a plurality of targets, K;

  defining 502 a matrix, $\tilde{A}$, formed of K vectors, $\underline{\tilde{a}}_n$, comprising one for each one of the plurality of targets, each "beam-steering" vector $\underline{\tilde{a}}_n$ representing an expected response of the target represented by the "beam-steering" vector with a predetermined amplitude and comprising a function of the direction of arrival and including a factor representing antenna imperfections;

  defining a signal amplitude vector $\underline{s}$ to represent expected complex amplitudes of each of the K targets as received in the radar signals;

  defining an objective function based on $\underline{x}$ and $\tilde{A}$;

  searching 505-514 for a set of directions of arrival angles for each of the targets K by the repeated evaluation of the objective function for a plurality of candidate beam-steering matrices $\tilde{A}$ that each include different beam-steering vectors over a search space, wherein said set of directions of arrival are derived from one of the candidate beam-steering matrix of the plurality of candidate beam-steering matrices that provides a minimum (or maximum in other examples) evaluation of the objective function over the search space; and

  wherein said search space comprises a plurality of discrete points, z, associated with the direction of arrival angles.

In particular, the method optionally comprises, at step 503, the generation of the first look up table, including wherein a dot product is computed to obtain for all k, $\tilde{F}_k = \underline{\tilde{a}}^H(\theta_k) \underline{x}$.

The search using the objective function is initiated by setting an index value k to 1 at step 505. Thus, in this figure and the examples explained herein k comprises the index of the candidate DoA angle for a first target and n comprises the index of the candidate angle for the second target.

Steps 506 to 510 represent an inner loop in which the search space of $N_\theta$ direction of arrival angles is stepped through.

Step 506 comprises checking whether the index k is equal $N_\theta$ (which designates that all of the candidate direction of arrival angles of the discretized search space have been evaluated). If the condition is false, the method proceeds to step 507. If the condition is true, the method proceeds to step 515.

Step 507 comprises reading, for the current candidate direction of arrival angle, the values of $\tilde{F}_k$ and $|\tilde{F}_k|^2$ from the first look up table generated at step 503.

Step 508 comprises setting a second index value n to equal to index value k+1. The index value n is thus representing the candidate DoA angle of the second target.

Step 509 comprises checking whether index value n is equal to $N_\theta$, that is the number of discrete direction of arrival angles in the search space.

If the condition at step 509 is true, then the method proceeds to step 510 in which the index value k is incremented by one. The method returns to step 506. If the condition of step 509 is false, the method proceeds to step 511.

Step 504 shows the generation of the second look up table. The second look up table may be generated for $\tilde{\alpha}_{k,n}$ and, optionally, for $\dfrac{1}{N\left(\tilde{\alpha}_{k,k}\,\tilde{\alpha}_{n,n} - |\tilde{\alpha}_{k,n}|^2\right)}$ .

Step 511 comprises reading, for the current candidate direction of arrival angle, the values of $\tilde{F}_n$ and $|\tilde{F}_n|^2$ from the first and second look up tables generated at step 503, 504.

Step 512 comprises reading, for the current n, $\tilde{\alpha}_{k,n}$ and, optionally, $\dfrac{1}{N\left(\tilde{\alpha}_{k,k}\,\tilde{\alpha}_{n,n} - |\tilde{\alpha}_{k,n}|^2\right)}$ from the second look up table generated at 504.

In addition, in block 512 another constant is fetched comprising one or more of $\tilde{\alpha}_{k,n}$, $\tilde{\alpha}_{k,k}$ and $\tilde{\alpha}_{n,n}$ and are substituted in $\dfrac{1}{N\left(\tilde{\alpha}_{k,k}\,\tilde{\alpha}_{n,n} - |\tilde{\alpha}_{k,n}|^2\right)}$ , etc, which may have been pre-calculated.

Step 513 comprises the evaluation of the objective function based on the current index value of k and n. The objective function comprises $\tilde{f}(k, n, \underline{x})$. Thus, $\tilde{f}$ is a function of the input dataset (or "snapshot") x and of the candidate DoA angles being indexed with k and n.

The method proceeds to step 514 in which index n is incremented by one. The method returns to step 509.

Step 515 represents the completion of the search once the objective function for all of the candidate values of the search space has been evaluated. The values of $\theta_k$ (the direction of arrival angle for a first target, as defined by index k) and $\theta_n$ (the direction of arrival angle for a second target, as defined by index n) for which the objective function is maximized or minimized over the search space is thus determined.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

**Claims**

1. An apparatus (101) comprising a processor (102) configured to:

   receive an input dataset, x, indicative of radar signals (104A, 104B) received at a plurality of antenna elements (107-111), wherein the radar signals (104A, 104B) have reflected from a plurality of targets (105, 106);
   **characterized in that** the processor (102) is further configured to:

   define a matrix, Ã, formed of direction-of-arrival-angle vectors, $\tilde{a}_n$, comprising one for each one of the plurality of targets (105, 106), each direction-of-arrival-angle vector representing an expected response at the plurality of antenna elements (107-111) of the radar signals (104A, 104B) from the target with a predetermined amplitude and comprising a function of a direction of arrival angle relative to the plurality of antenna elements (107-111) and including antenna-imperfection-factors, $q_p$, one for each of the plurality of antenna elements (107-111), that represent the direction-of-arrival-angle dependent effect of antenna imperfections;
   define an objective function based on x and Ã;
   search for a set of the direction of arrival angles for each of the plurality of targets (105, 106) by the repeated evaluation of the objective function for a plurality of candidate matrices based on matrix Ã that each include different direction-of-arrival-angle vectors over a search space, wherein said set of direction of arrival angles are derived from one of the candidate matrices of the plurality of candidate matrices that provides one of a maximum and a minimum evaluation of the objective function over the search space; and
   wherein said search space comprises a plurality of discrete points associated with the direction of arrival angle.

2. The apparatus (101) of claim 1, wherein the antenna-imperfection-factors, $q_p$, comprise:

$$q_p = g_p(\theta_n)e^{jh_p(\theta_n)}$$

   wherein $g_p(\theta_n)$ represents an angle dependent gain error caused by the antenna imperfections and $h_p(\theta_n)$ represents an angle dependent phase error caused by the antenna imperfections and wherein n designates an index to step through the direction of arrival angles of the search space and wherein p comprises an index that designates each of the N antenna elements.

3. The apparatus (101) of claim 1 or claim 2, wherein the apparatus (101) is configured to, prior to said search for the set of direction of arrival angles, determine a first look up table, said first look up table providing an association between each of the plurality of discrete points of the search space and a function $\tilde{F}_k$, wherein $\tilde{F}_k = \underline{\tilde{a}}^H(\theta_k)\underline{x}$ and $\underline{\tilde{a}}^H(\theta_k)$ comprises a Hermitian transpose of the direction-of-arrival-angle vector, $\tilde{a}$, for a candidate direction of arrival angle $\theta_k$ having index k; and
   wherein said search comprises a step of retrieving $\tilde{F}_k$ from the look up table for each of the targets (105, 106) being evaluated for evaluating the objective function, wherein the objective function is based on the expression, $\tilde{f}$:

$$\tilde{f} = \left(\tilde{A}^H\underline{x}\right)^H\left(\tilde{A}^H\tilde{A}\right)^{-1}\left(\tilde{A}^H\underline{x}\right)$$

   and $\tilde{F}_k$ comprises part of the evaluation of the term $(\tilde{A}^H\underline{x})$ of said expression, $\tilde{f}$.

4. The apparatus (101) of claim 3, wherein the apparatus (101) is configured to determine $\tilde{F}_k$ by performing a correlation comprising calculating an inner product between direction-of-arrival-angle vector, $\underline{\tilde{a}}$, and the input dataset, x, to obtain a complex value expression, wherein the first look up table comprises the evaluation of the complex value expression over the search space.

5. The apparatus (101) of claim 4, wherein the apparatus (101) is configured to perform said correlation by calculation of dot products.

6. The apparatus (101) of any preceding claim, wherein the direction-of-arrival-angle vectors are of the form:

$$\underline{\tilde{a}}_k^T = \left(q_1 e^{j\,2\pi(d_1/\lambda)\sin\theta_k},\ q_2 e^{j\,2\pi(d_2/\lambda)\sin\theta_k},\ \ldots, q_N e^{j\,2\pi(d_N/\lambda)\sin\theta_k}\right)$$

for index k and the antenna-imperfection-factors are represented by $q_p$ wherein p comprises an index for the plurality of antenna elements (107-111).

7. The apparatus (101) of any preceding claim, wherein the apparatus (101) is configured to, prior to said search for the set of direction of arrival angles, determine a second look up table, said second look up table providing an evaluation of $\tilde{\alpha}_{k,n} = (\underline{\tilde{a}}^H(\theta_k)\underline{\tilde{a}}(\theta_n))/N$ wherein $\underline{\tilde{a}}^H(\theta_k)$ comprises a Hermitian transpose of the direction-of-arrival-angle vector for candidate direction of arrival angle $\theta_k$, and $\underline{\tilde{a}}(\theta_n)$ comprises the direction-of-arrival-angle vector for a candidate direction of arrival angle $\theta_n$, wherein k represents an index for each of the discrete points of the search space for a first target of the plurality of targets (105, 106) and n represents an index for each of the discrete points of the search space for a second target of the plurality of targets (105, 106); and

wherein said search comprises a step of retrieving $\tilde{\alpha}_{k,n}$ from the second look up table for evaluating the objective function, wherein the objective function is based on the expression, $\tilde{f}$:

$$\tilde{f} = \left(\tilde{\boldsymbol{A}}^H\underline{x}\right)^H\left(\tilde{\boldsymbol{A}}^H\tilde{\boldsymbol{A}}\right)^{-1}\left(\tilde{\boldsymbol{A}}^H\underline{x}\right)$$

and wherein the term $(\tilde{\boldsymbol{A}}^H\tilde{\boldsymbol{A}})^{-1}$ is determined based on:

$$\left(\tilde{\boldsymbol{A}}^H\tilde{\boldsymbol{A}}\right)^{-1} = \frac{1}{N\left(\tilde{\alpha}_{k,k}\tilde{\alpha}_{n,n} - |\tilde{\alpha}_{k,n}|^2\right)}\begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix}.$$

8. The apparatus (101) of claim 7, wherein the apparatus (101) is configured to determine the second look up table based on the properties $\tilde{\alpha}_{k,n} = (\tilde{\alpha}_{n,k})^*$, such that the second look up table size for $\tilde{\alpha}_{k,n}$ is $\frac{1}{2}N_\theta(N_\theta-1)$, wherein $N_\theta$ designates the number of discrete points in the search space.

9. The apparatus (101) of any preceding claim, wherein the objective function $\tilde{f}$ is based on $\tilde{f} = (\tilde{\boldsymbol{A}}^H\underline{x})^H(\tilde{\boldsymbol{A}}^H\tilde{\boldsymbol{A}})^{-1}(\tilde{\boldsymbol{A}}^H\underline{x})$.

10. The apparatus (101) of any preceding claim, wherein the objective function $\tilde{f}$ comprises $\tilde{f} = \frac{1}{N\left(\tilde{\alpha}_{k,k}\,\tilde{\alpha}_{n,n} - |\tilde{\alpha}_{k,n}|^2\right)}\left(\left|\tilde{F}_k\right|^2 - 2\,Re\left\{\tilde{\alpha}_{k,n}\tilde{F}_k\tilde{F}_n^*\right\} + \left|\tilde{F}_n\right|^2\right)$ wherein $\tilde{F}_k = \underline{\tilde{a}}^H(\theta_k)\underline{x}$ and $\tilde{F}_n = \underline{\tilde{a}}^H(\theta_n)\underline{x}$, and $\tilde{\alpha}_{k,n} = (\underline{\tilde{a}}^H(\theta_k)\underline{\tilde{a}}(\theta_n))/N$, and $\tilde{\alpha}_{k,k} = (\underline{\tilde{a}}^H(\theta_k)\underline{\tilde{a}}(\theta_k))/N$, and $\tilde{a}_{n,n} = (\underline{\tilde{a}}^H(\theta_n)\underline{\tilde{a}}(\theta_n))/N$.

11. The apparatus (101) of any preceding claim, wherein the apparatus is configured to account for noise by application of a factor $\Lambda^{1/2}\phi^T$ to the matrix $\tilde{A}$ wherein $\Lambda$ is a diagonal matrix representing the spatial colouring comprising the variance of each noise component, and $\phi$ is the correlation between the noise components, such that the noise covariance matrix is $\Sigma = \Lambda\phi\Lambda^{-1}$; wherein

the apparatus (101) being configured to define the objective function comprises the apparatus (101) being configured to define the objective function based on x and $\Lambda^{1/2}\phi^T\tilde{A}$.

12. The apparatus (101) of any preceding claim, wherein the apparatus (101) is configured to account for antenna coupling effects by application of a matrix M(θ) to the matrix $\tilde{A}$ wherein matrix M(θ) is a predetermined matrix that is indicative of the effect the excitation of one of the plurality of antenna elements (107-111) will have on the signal measured with another of the plurality of antenna elements (107-111); and

wherein the apparatus (101) being configured to define the objective function comprises the apparatus (101) being configured to define the objective function based on $\underline{x}$ and M(θ).$\tilde{A}$.

13. The apparatus (101) of any preceding claim, wherein the apparatus (101) includes a Range-Doppler processing module configured to separate antenna data into one or more datasets, each dataset representative of one or more targets (105, 106) and each dataset, relative to others of the one or more datasets, being representative of one or both of:

different ranges from the antenna elements (107-111); and
different radial velocities relative to the antenna elements (107-111);

wherein the antenna data comprises radar signals received at the plurality of antenna elements (107-111) that have reflected from the plurality of targets (105, 106), and wherein the input dataset, $\underline{x}$, comprises one of said one or more datasets separated by the Range-Doppler processing module.

14. The apparatus (101) of any preceding claim, wherein the apparatus comprises a frequency-modulated-continuous-wave, FMCW, radar system.

15. A computer implemented method for determining the directions of arrival angles for each of a plurality of targets K in radar signals comprising:

receiving an input dataset, $\underline{x}$, indicative of radar signals received at a plurality of antenna elements (107-111) wherein the radar signals have reflected from a plurality of targets (105, 106);
**characterized in that** the method further comprises:

defining a matrix, $\tilde{A}$, formed of direction-of-arrival-angle vectors, $\underline{\tilde{a}}_n$, comprising one for each one of the plurality of targets (105, 106), each direction-of-arrival-angle vector representing an expected response at the plurality of antenna elements (107-111) of the radar signals from the target with a predetermined amplitude and comprising a function of the direction of arrival angle relative to the plurality of antenna elements (107-111) and including antenna-imperfection-factors, $q_p$, one for each of the plurality of antenna elements (107-111), that represent the direction-of-arrival-angle dependent effect of antenna imperfections;
defining an objective function based on $\underline{x}$ and $\tilde{A}$;
searching for a set of directions of arrival angles for each of the plurality of targets (105, 106) by the repeated evaluation of the objective function for a plurality of candidate matrices based on matrix $\tilde{A}$ that each include different direction-of-arrival-angle vectors over a search space, wherein said set of directions of arrival angles are derived from one of the candidate matrices of the plurality of candidate matrices that provides one of a maximum and minimum evaluation of the objective function over the search space; and
wherein said search space comprises a plurality of discrete points associated with the direction of arrival angles.

**Patentansprüche**

1. Einrichtung (101), umfassend einen Prozessor (102), der ausgelegt ist zum:

Empfangen eines Eingangsdatensatzes, $\underline{x}$, der Radarsignale (104A, 104B) angibt, die an einer Vielzahl von Antennenelementen (107-111) empfangen werden, wobei die Radarsignale (104A, 104B) von einer Vielzahl von Zielen (105, 106) reflektiert wurden;
**dadurch gekennzeichnet, dass** der Prozessor (102) ferner ausgelegt ist zum:

Definieren einer Matrix, $\tilde{A}$, die aus Ankunftsrichtungswinkelvektoren, $\underline{\tilde{a}}_n$, gebildet ist, die einen für jedes der Vielzahl von Zielen (105, 106) umfasst, wobei jeder Ankunftsrichtungswinkelvektor eine erwartete Antwort an der Vielzahl von Antennenelementen (107-111) der Radarsignale (104A, 104B) von dem Ziel mit einer vorbestimmten Amplitude repräsentiert und eine Funktion eines Ankunftsrichtungswinkels relativ zu der Vielzahl von Antennenelementen (107-111) umfasst und Antennenmängelfaktoren, $q_p$, einschließt, einen für jedes der Vielzahl von Antennenelementen (107-111), die den ankunftsrichtungswinkelabhängigen Effekt von Antennenmängeln repräsentieren;
Definieren einer Zielfunktion basierend auf $\underline{x}$ und $\tilde{A}$;
Suchen nach einem Satz der Ankunftsrichtungswinkel für jedes der Vielzahl von Zielen (105, 106) durch die wiederholte Bewertung der Zielfunktion für eine Vielzahl von Kandidatenmatrizen basierend auf der Matrix $\tilde{A}$, die jeweils unterschiedliche Ankunftsrichtungswinkelvektoren beinhalten, über einen Suchraum, wobei der Satz von Ankunftsrichtungswinkeln von einer der Kandidatenmatrizen der Vielzahl von Kandidatenmatrizen abgeleitet wird, die entweder eine maximale oder eine minimale Bewertung der Zielfunktion über den Suchraum bereitstellt; und

wobei der Suchraum eine Vielzahl von diskreten Punkte umfasst, die mit dem Ankunftsrichtungswinkel assoziiert sind.

2. Einrichtung (101) nach Anspruch 1, wobei die Antennenmängelfaktoren, $q_p$, Folgendes umfassen:

$$q_p = g_p(\theta_n)e^{jh_p(\theta_n)}$$

wobei $g_p(\theta_n)$ einen winkelabhängigen Verstärkungsfehler repräsentiert, der durch die Antennenmängel verursacht wird, und $h_p(\theta_n)$ einen winkelabhängigen Phasenfehler repräsentiert, der durch die Antennenmängel verursacht wird, und wobei n einen Index bezeichnet, um die Ankunftsrichtungswinkel des Suchraums zu durchlaufen, und wobei p einen Index umfasst, der jedes der N Antennenelemente bezeichnet.

3. Einrichtung (101) nach Anspruch 1 oder Anspruch 2, wobei die Einrichtung (101) dazu ausgelegt ist, vor der Suche nach dem Satz von Ankunftsrichtungswinkeln, eine erste Nachschlagetabelle zu bestimmen, wobei die erste Nachschlagetabelle eine Assoziation zwischen jedem der Vielzahl von diskreten Punkten des Suchraums und einer Funktion $\tilde{F}_k$ bereitstellt, wobei $\tilde{F}_k = \underline{\tilde{a}}^H(\theta_k)\underline{x}$ und $\underline{\tilde{a}}^H(\theta_k)$ eine Hermitesche Transponierung des Ankunftsrichtungswinkelvektors, $\tilde{a}$, für einen Kandidatenankunftsrichtungswinkel $\theta_k$ mit Index k umfassen; und

wobei die Suche einen Schritt des Abrufens von $\tilde{F}_k$ aus der Nachschlagetabelle für jedes der Ziele (105, 106) umfasst, die zum Bewerten der Zielfunktion bewertet werden, wobei die Zielfunktion auf dem Ausdruck $\tilde{f}$ basiert:

$$\tilde{f} = \left(\tilde{\boldsymbol{A}}^H \underline{x}\right)^H \left(\tilde{\boldsymbol{A}}^H \tilde{\boldsymbol{A}}\right)^{-1} \left(\tilde{\boldsymbol{A}}^H \underline{x}\right)$$

und $\tilde{F}_k$ einen Teil der Bewertung des Terms $(\tilde{\boldsymbol{A}}^H\underline{x})$ dieses Ausdrucks $\tilde{f}$ umfasst.

4. Einrichtung (101) nach Anspruch 3, wobei die Einrichtung (101) dazu ausgelegt ist, $\tilde{F}_k$ durch Durchführen einer Korrelation zu bestimmen, die das Berechnen eines inneren Produkts zwischen dem Ankunftsrichtungswinkelvektor $\underline{\tilde{a}}$ und dem Eingangsdatensatz $\underline{x}$ umfasst, um einen komplexen Wertausdruck zu erhalten, wobei die erste Nachschlagetabelle die Bewertung des komplexen Wertausdrucks über den Suchraum umfasst.

5. Einrichtung (101) nach Anspruch 4, wobei die Einrichtung (101) dazu ausgelegt ist, die Korrelation durch Berechnen von Skalarprodukten durchzuführen.

6. Einrichtung (101) nach einem der vorhergehenden Ansprüche, wobei die Ankunftsrichtungswinkelvektoren die folgende Form aufweisen:

$$\underline{\tilde{a}}_k^T = \left(q_1 e^{j\,2\pi(d_1/\lambda)\sin\theta_k},\ q_2 e^{j\,2\pi(d_2/\lambda)\sin\theta_k},\ \dots,\ q_N e^{j\,2\pi(d_N/\lambda)\sin\theta_k}\right)$$

für Index k und die Antennenmängelfaktoren durch $q_p$ repräsentiert werden, wobei p einen Index für die Vielzahl von Antennenelementen (107-111) umfasst.

7. Einrichtung (101) nach einem der vorhergehenden Ansprüche, wobei die Einrichtung (101) dazu ausgelegt ist, vor der Suche nach dem Satz von Ankunftsrichtungswinkeln, eine zweite Nachschlagetabelle zu bestimmen, wobei die zweite Nachschlagetabelle eine Bewertung von $\tilde{\alpha}_{k,n} = (\underline{\tilde{a}}^H(\theta_k)\underline{\tilde{a}}(\theta_n))/N$ bereitstellt, wobei $\underline{\tilde{a}}^H(\theta_k)$ eine Hermitesche Transponierung des Ankunftsrichtungswinkelvektors für einen Kandidatenankunftsrichtungswinkel $\theta_k$ umfasst, und $\underline{\tilde{a}}(\theta_n)$ den Ankunftsrichtungswinkelvektor für einen Kandidatenankunftsrichtungswinkel $\theta_n$ umfasst, wobei k einen Index für jeden der diskreten Punkte des Suchraums für ein erstes Ziel der Vielzahl von Zielen (105, 106) repräsentiert und n einen Index für jeden der diskreten Punkte des Suchraums für ein zweites Ziel der Vielzahl von Zielen (105, 106) repräsentiert; und

wobei die Suche einen Schritt des Abrufens von $\tilde{\alpha}_{k,n}$ aus der zweiten Nachschlagetabelle zum Bewerten der Zielfunktion umfasst, wobei die Zielfunktion auf dem Ausdruck $\tilde{f}$ basiert:

$$\tilde{f} = \left(\tilde{\boldsymbol{A}}^H \underline{x}\right)^H \left(\tilde{\boldsymbol{A}}^H \tilde{\boldsymbol{A}}\right)^{-1} \left(\tilde{\boldsymbol{A}}^H \underline{x}\right)$$

und wobei der Term $(\tilde{A}^H\tilde{A})^{-1}$ basierend auf Folgendem bestimmt wird:

$$\left(\tilde{A}^H\tilde{A}\right)^{-1} = \frac{1}{N\left(\tilde{\alpha}_{k,k}\tilde{\alpha}_{n,n} - |\tilde{\alpha}_{k,n}|^2\right)}\begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix}.$$

8. Einrichtung (101) nach Anspruch 7, wobei die Einrichtung (101) dazu ausgelegt ist, die zweite Nachschlagetabelle basierend auf den Eigenschaften $\tilde{\alpha}_{k,n} = (\tilde{\alpha}_{n,k})^*$ zu bestimmen, sodass die zweite Nachschlagetabellengröße für $\tilde{\alpha}_{k,n}$ $\frac{1}{2}N_\theta(N_\theta-1)$ beträgt, wobei $N_\theta$ die Anzahl von diskreten Punkten in dem Suchraum bezeichnet.

9. Einrichtung (101) nach einem der vorhergehenden Ansprüche, wobei die Zielfunktion $\tilde{f}$ auf $\tilde{f} = (\tilde{A}^H\underline{x})^H(\tilde{A}^H\tilde{A})^{-1}(\tilde{A}^H\underline{x})$ basiert.

10. Einrichtung (101) nach einem der vorhergehenden Ansprüche, wobei die Zielfunktion $\tilde{f}$

$$\tilde{f} = \frac{1}{N\left(\tilde{\alpha}_{k,k}\,\tilde{\alpha}_{n,n} - |\tilde{\alpha}_{k,n}|^2\right)}\left(|\tilde{F}_k|^2 - 2\,Re\left\{\tilde{\alpha}_{k,n}\tilde{F}_k\tilde{F}_n^*\right\} + |\tilde{F}_n|^2\right) \text{ umfasst}$$

wobei $\tilde{F}_k = \underline{\tilde{a}}^H(\theta_k)\underline{x}$ und $\tilde{F}_n = \underline{\tilde{a}}^H(\theta_n)\underline{x}$, und $\tilde{\alpha}_{k,n} = (\underline{\tilde{a}}^H(\theta_k)\underline{\tilde{a}}(\theta_n))/N$, und $\tilde{\alpha}_{k,k} = (\underline{\tilde{a}}^H(\theta_k)\underline{\tilde{a}}(\theta_k))/N$, und $\tilde{\alpha}_{n,n} = (\underline{\tilde{a}}(\theta_n)\underline{\tilde{a}}(\theta_n))/N$.

11. Einrichtung (101) nach einem der vorhergehenden Ansprüche, wobei die Einrichtung dazu ausgelegt ist, Rauschen durch Anwenden eines Faktors $\Lambda^{1/2}\phi^T$ auf die Matrix $\tilde{A}$ zu berücksichtigen, wobei $\Lambda$ eine Diagonalmatrix ist, die die räumliche Färbung repräsentiert, die die Varianz jeder Rauschkomponente umfasst, und $\Phi$ die Korrelation zwischen den Rauschkomponenten ist, sodass die Rauschkovarianzmatrix $\Sigma = \Lambda\phi\Lambda^{-1}$ ist; wobei,
dass die Einrichtung (101) dazu ausgelegt ist, die Zielfunktion zu definieren, umfasst, dass die Einrichtung (101) dazu ausgelegt ist, die Zielfunktion basierend auf $\underline{x}$ und $\Lambda^{1/2}\phi^T\tilde{A}$ zu definieren.

12. Einrichtung (101) nach einem der vorhergehenden Ansprüche, wobei die Einrichtung (101) dazu ausgelegt ist, Antennenkopplungseffekte durch Anwenden einer Matrix $M(\theta)$ auf die Matrix $\tilde{A}$ zu berücksichtigen, wobei die Matrix $M(\theta)$ eine vorbestimmte Matrix ist, die den Effekt angibt, den die Anregung eines der Vielzahl von Antennenelementen (107-111) auf das mit einem anderen der Vielzahl von Antennenelementen (107-111) gemessene Signal haben wird; und
wobei, dass die Einrichtung (101) dazu ausgelegt ist, die Zielfunktion zu definieren, umfasst, dass die Einrichtung (101) dazu ausgelegt ist, die Zielfunktion basierend auf x und $M(\theta).\tilde{A}$ zu definieren.

13. Einrichtung (101) nach einem der vorhergehenden Ansprüche, wobei die Einrichtung (101) ein Entfernungs-Doppler-Verarbeitungsmodul beinhaltet, das dazu ausgelegt ist, Antennendaten in einen oder mehrere Datensätze zu trennen, wobei jeder Datensatz ein oder mehrere Ziele (105, 106) repräsentiert und jeder Datensatz relativ zu anderen des einen oder der mehreren Datensätze für eines oder beide von Folgendem repräsentativ ist:

verschiedene Entfernungen von den Antennenelementen (107-111); und
unterschiedliche radiale Geschwindigkeiten relativ zu den Antennenelementen (107-111); wobei die Antennendaten Radarsignale umfassen, die an der Vielzahl von Antennenelementen (107-111) empfangen werden, die von der Vielzahl von Zielen (105, 106) reflektiert wurden, und wobei der Eingangsdatensatz, $\underline{x}$, einen des einen oder der mehreren Datensätze umfasst, die durch das Entfernungs-Doppler-Verarbeitungsmodul getrennt werden.

14. Einrichtung (101) nach einem der vorhergehenden Ansprüche, wobei die Einrichtung ein Radarsystem mit frequenzmodulierter Dauerstrichwelle, FMCW, umfasst.

15. Computerimplementiertes Verfahren zum Bestimmen der Ankunftsrichtungswinkel für jedes einer Vielzahl von Zielen K in Radarsignalen, umfassend:

Empfangen eines Eingangsdatensatzes, $\underline{x}$, der Radarsignale angibt, die an einer Vielzahl von Antennenelementen (107-111) empfangen werden, wobei die Radarsignale von einer Vielzahl von Zielen (105, 106) reflektiert wurden;
**dadurch gekennzeichnet, dass** das Verfahren ferner Folgendes umfasst:

Definieren einer Matrix, $\tilde{A}$, die aus Ankunftsrichtungswinkelvektoren, $\underline{\tilde{a}}_n$, gebildet ist, die einen für jedes der Vielzahl von Zielen (105, 106) umfasst, wobei jeder Ankunftsrichtungswinkelvektor eine erwartete Antwort an der Vielzahl von Antennenelementen (107-111) der Radarsignale von dem Ziel mit einer vorbestimmten Amplitude repräsentiert und eine Funktion des Ankunftsrichtungswinkels relativ zu der Vielzahl von Antennenelementen (107-111) umfasst und Antennenmängelfaktoren, $q_p$, einschließt, einen für jedes der Vielzahl von Antennenelementen (107-111), die den ankunftsrichtungswinkelabhängigen Effekt von Antennenmängeln repräsentieren;

Definieren einer Zielfunktion basierend auf $\underline{x}$ und $\tilde{A}$;

Suchen nach einem Satz von Ankunftsrichtungswinkeln für jedes der Vielzahl von Zielen (105, 106) durch die wiederholte Bewertung der Zielfunktion für eine Vielzahl von Kandidatenmatrizen basierend auf der Matrix $\tilde{A}$, die jeweils unterschiedliche Ankunftsrichtungswinkelvektoren beinhalten, über einen Suchraum, wobei der Satz von Ankunftsrichtungswinkeln von einer der Kandidatenmatrizen der Vielzahl von Kandidatenmatrizen abgeleitet wird, die entweder eine maximale oder eine minimale Bewertung der Zielfunktion über den Suchraum bereitstellt; und

wobei der Suchraum eine Vielzahl von diskreten Punkte umfasst, die mit den Ankunftsrichtungswinkeln assoziiert sind.

## Revendications

1. Appareil (101) comprenant un processeur (102) configuré pour :

   recevoir un ensemble de données d'entrée, $\underline{x}$, indicatif de signaux radar (104A, 104B) reçus au niveau d'une pluralité d'éléments d'antenne (107-111), où les signaux radar (104A, 104B) ont été réfléchis par une pluralité de cibles (105, 106) ;

   **caractérisé en ce que** le processeur (102) est en outre configuré pour :

   définir une matrice, $\tilde{A}$, formée de vecteurs d'angle de direction d'arrivée, $\underline{\tilde{a}}_n$, un pour chacune de la pluralité de cibles (105, 106), chaque vecteur de direction d'arrivée représentant une réponse attendue à la pluralité d'éléments d'antenne (107-111) des signaux radar (104A, 104B) issus de la cible avec une amplitude prédéterminée et comprenant une fonction d'un angle de direction d'arrivée par rapport à la pluralité d'éléments d'antenne (107-111) et incluant des facteurs d'imperfection d'antenne, $_p$, un pour chacun de la pluralité d'éléments d'antenne (107-111), qui représentent l'effet dépendant de l'angle de direction d'arrivée des imperfections d'antenne ;

   définir une fonction objective basée sur $\underline{x}$ et $\tilde{A}$ ;

   rechercher un ensemble des angles de direction d'arrivée pour chacune de la pluralité de cibles (105, 106) par l'évaluation répétée de la fonction d'objectif pour une pluralité de matrices candidates basées sur la matrice $\tilde{A}$ qui comportent chacune différents vecteurs angle de direction d'arrivée sur un espace de recherche, où les angles dudit ensemble d'angles de direction d'arrivée sont dérivés d'une des matrices candidates de la pluralité de matrices candidates qui fournit l'une parmi une évaluation maximale et une évaluation minimale de la fonction d'objectif sur l'espace de recherche ; et

   où ledit espace de recherche comprend une pluralité de points discrets associés à l'angle de direction d'arrivée.

2. Appareil (101) selon la revendication 1, dans lequel les facteurs d'imperfection d'antenne, $q_p$, comprennent : $q_p = g_p(\theta_n)e^{jhp(\theta n)}$ où $g_p(\theta_n)$ représente une erreur de gain dépendant de l'angle causée par les imperfections de l'antenne et $h_p(\theta_n)$ représente une erreur de phase dépendant de l'angle causée par les imperfections de l'antenne et où n désigne un indice pour parcourir la direction des angles d'arrivée de l'espace de recherche et où p comprend un indice qui désigne chacun des N éléments d'antenne.

3. Appareil (101) selon la revendication 1 ou la revendication 2, dans lequel l'appareil (101) est configuré, avant ladite recherche de l'ensemble d'angles de directions d'arrivée, pour déterminer une première table de consultation, ladite première table de consultation fournissant une association entre chacun de la pluralité de points discrets de l'espace de recherche et une fonction $\tilde{F}_k$, où $\tilde{F}_k = \underline{\tilde{a}}^H(\theta_k)\underline{x}$ et $\underline{\tilde{a}}^H(\theta_k)$ comprend une transposée hermitienne du vecteur d'angle de direction d'arrivée, $\tilde{\alpha}$ pour un angle de direction d'arrivée candidat $\theta_k$ d'indice k ; et

   où ladite recherche comporte une étape de récupération $\tilde{F}$ de $_k$ de la table de consultation pour chacune des cibles (105, 106) évaluées pour évaluer la fonction d'objectif, la fonction d'objectif étant basée sur l'expression, $\tilde{f}$ :

$$\tilde{f} = \left(\tilde{\boldsymbol{A}}^H \underline{x}\right)^H \left(\tilde{\boldsymbol{A}}^H \tilde{\boldsymbol{A}}\right)^{-1} \left(\tilde{\boldsymbol{A}}^H \underline{x}\right)$$

et $\tilde{F}_k$ comprend une partie de l'évaluation du terme $(\tilde{\boldsymbol{A}}^H \underline{x})$ de ladite expression, $\tilde{f}$.

4. Appareil (101) selon la revendication 3, dans lequel l'appareil (101) est configuré pour déterminer $\tilde{F}_k$ en effectuant une corrélation comprenant le calcul d'un produit interne entre le vecteur d'angle de direction d'arrivée, $\underline{\tilde{a}}$, et l'ensemble de données d'entrée, x, pour obtenir une expression de valeur complexe, où la première table de consultation comprend l'évaluation de l'expression de valeur complexe sur l'espace de recherche.

5. Appareil (101) selon la revendication 4, dans lequel l'appareil (101) est configuré pour effectuer ladite corrélation par calcul de produits scalaires.

6. Appareil (101) selon l'une quelconque des revendications précédentes, dans lequel les vecteurs d'angle de direction d'arrivée sont de la forme :

$$\underline{\tilde{a}}_k^T = \left(q_1 e^{j\,2\pi(d_1/\lambda)\sin\theta_k},\ q_2 e^{j\,2\pi(d_2/\lambda)\sin\theta_k},\ \dots, q_N e^{j\,2\pi(d_N/\lambda)\sin\theta_k}\right)$$

pour l'index k et les facteurs d'imperfection d'antenne sont représentés par $q_p$, p comprenant un index pour la pluralité d'éléments d'antenne (107-111).

7. Appareil (101) selon l'une quelconque des revendications précédentes, dans lequel l'appareil (101) est configuré pour, avant ladite recherche de l'ensemble d'angles de direction d'arrivée, déterminer une deuxième table de consultation, ladite deuxième table de consultation fournissant une évaluation de $\tilde{\alpha}_{k,n} = (\underline{\tilde{a}}^H(\theta_k)\underline{\tilde{a}}(\theta_n))/N$ où $\underline{\tilde{a}}^H(\theta_k)$ comprend une transposée hermitienne du vecteur angle de direction d'arrivée pour la direction candidate d'angle d'arrivée $\theta_k$, $\underline{\tilde{a}}(\theta_n)$ et comprend le vecteur d'angle de direction d'arrivée pour une direction candidate d'angle d'arrivée $\theta_n$, où k représente un indice pour chacun des points discrets de l'espace de recherche pour une première cible de la pluralité de cibles (105, 106) et n un indice pour chacun des points discrets de l'espace de recherche pour une deuxième cible de la pluralité de cibles (105, 106) ; et où ladite recherche comprend une étape de récupération de $\tilde{\alpha}_{k,n}$ de la deuxième table de correspondance pour évaluer la fonction d'objectif, la fonction d'objectif étant basée sur l'expression $\tilde{f}$ :

$$\tilde{f} = \left(\tilde{\boldsymbol{A}}^H \underline{x}\right)^H \left(\tilde{\boldsymbol{A}}^H \tilde{\boldsymbol{A}}\right)^{-1} \left(\tilde{\boldsymbol{A}}^H \underline{x}\right)$$

et où le terme $(\tilde{\boldsymbol{A}}^H \tilde{\boldsymbol{A}})^{-1}$ est déterminé sur la base de :

$$\left(\tilde{\boldsymbol{A}}^H \tilde{\boldsymbol{A}}\right)^{-1} = \frac{1}{N\left(\tilde{\alpha}_{k,k}\tilde{\alpha}_{n,n} - |\tilde{\alpha}_{k,n}|^2\right)} \begin{pmatrix} \tilde{\alpha}_{n,n} & -\tilde{\alpha}_{k,n}^* \\ -\tilde{\alpha}_{k,n} & \tilde{\alpha}_{k,k} \end{pmatrix}.$$

8. Appareil (101) selon la revendication 7, dans lequel l'appareil (101) est configuré pour déterminer la deuxième table de consultation sur la base des propriétés $\tilde{\alpha}_{k,n} = (\tilde{\alpha}_{n,k})^*$, de telle sorte que la deuxième taille de table de consultation pour $\tilde{\alpha}_{k,n}$ soit $\tfrac{1}{2}N_\theta(N_\theta-1)$, où $N_\theta$ désigne le nombre de points discrets de l'espace de recherche.

9. Appareil (101) selon l'une quelconque des revendications précédentes, dans lequel la fonction d'objectif $\tilde{f}$ est basée sur $\tilde{f} = (\tilde{\boldsymbol{A}}^H \underline{x})^H (\tilde{\boldsymbol{A}}^H \tilde{\boldsymbol{A}})^{-1}(\tilde{\boldsymbol{A}}^H \underline{x})$.

10. Appareil (101) selon l'une quelconque des revendications précédentes, dans lequel la fonction d'objectif $\tilde{f}$ comprend

$$\tilde{f} = \frac{1}{N\left(\tilde{\alpha}_{k,k}\,\tilde{\alpha}_{n,n} - |\tilde{\alpha}_{k,n}|^2\right)} \left(|\tilde{F}_k|^2 - 2\,Re\left\{\tilde{\alpha}_{k,n}\tilde{F}_k\tilde{F}_n^*\right\} + |\tilde{F}_n|^2\right)$$

où $\tilde{F}_k = \underline{\tilde{a}}^H(\theta_k)\underline{x}$ et $\tilde{F}_n = \underline{\tilde{a}}^H(\theta_n)\underline{x}$, et $\tilde{\alpha}_{k,n} = (\underline{\tilde{a}}(\theta_k)\underline{\tilde{a}}(\theta_n))/N$, et $\tilde{\alpha}_{k,k} = (\underline{\tilde{a}}^H(\theta_k)\underline{\tilde{a}}(\theta_k))/N$, et $\tilde{\alpha}_{n,n} = (\underline{\tilde{a}}^H(\theta_n)\underline{\tilde{a}}(\theta_n))/N$.

11. Appareil (101) selon l'une quelconque des revendications précédentes, dans lequel l'appareil est configuré pour prendre en compte le bruit par application d'un facteur $\Lambda^{1/2}\phi^T$ à la matrice $\tilde{A}$ où A est une matrice diagonale représentant la coloration spatiale comprenant la variance de chaque composante de bruit, et $\Phi$ est la corrélation entre les composantes de bruit, de telle sorte que la matrice de covariance de bruit soit $\Sigma = \Lambda\phi\Lambda^{-1}$ ; où l'appareil (101) étant configuré pour définir la fonction d'objectif comporte l'appareil (101) étant configuré pour définir la fonction d'objectif sur la base de $\underline{x}$ et $\Lambda^{1/2}\phi^T\tilde{A}$ .

12. Appareil (101) selon l'une quelconque des revendications précédentes, dans lequel l'appareil (101) est configuré pour prendre en compte les effets de couplage d'antenne par application d'une matrice $M(\theta)$ à la matrice $\tilde{A}$, la matrice $M(\theta)$ étant une matrice prédéterminée qui est indicative de l'effet que l'excitation de l'un de la pluralité d'éléments d'antenne (107-111) aura sur le signal mesuré avec un autre élément de la pluralité d'éléments d'antenne (107-111) ; et

   où l'appareil (101) étant configuré pour définir la fonction d'objectif comporte l'appareil (101) étant configuré pour définir la fonction d'objectif sur la base de x et $M(\theta).\tilde{A}$.

13. Appareil (101) selon l'une quelconque des revendications précédentes, dans lequel l'appareil (101) comprend un module de traitement Range-Doppler configuré pour séparer des données d'antenne en un ou plusieurs ensembles de données, chaque ensemble de données étant représentatif d'une ou plusieurs cibles (105, 106) et chaque ensemble de données étant, par rapport aux autres des un ou plusieurs ensembles de données, représentatif de l'un ou des deux éléments suivants :

   des distances différentes par rapport aux éléments d'antenne (107-111) ; et
   des vitesses radiales différentes par rapport aux éléments d'antenne (107-111) ; où les données d'antenne comprennent des signaux radar reçus au niveau de la pluralité d'éléments d'antenne (107-111) qui ont été réfléchis par la pluralité de cibles (105, 106), et où l'ensemble de données d'entrée, x, comprend un desdits un ou plusieurs ensembles de données séparés par le module de traitement Range-Doppler.

14. Appareil (101) selon l'une quelconque des revendications précédentes, dans lequel l'appareil comprend un système radar à onde continue modulée en fréquence, FMCW.

15. Procédé mis en œuvre par ordinateur pour déterminer les angles de directions d'arrivée pour chacune d'une pluralité de cibles K dans des signaux radar, le procédé comprenant l'étape suivante :

   recevoir un ensemble de données d'entrée, x, indicatifs de signaux radar reçus au niveau d'une pluralité d'éléments d'antenne (107-111), les signaux radar ayant été réfléchis par une pluralité de cibles (105, 106) ;
   **caractérisé en ce que** le procédé comprend en outre les étapes suivantes :

      définir une matrice, $\tilde{A}$, formée de vecteurs d'angle de direction d'arrivée, $\underline{a}_n$, un pour chacune de la pluralité de cibles (105, 106), chaque vecteur de direction d'arrivée représentant une réponse attendue à la pluralité d'éléments d'antenne (107-111) des signaux radar issus de la cible avec une amplitude prédéterminée et comprenant une fonction de l'angle de direction d'arrivée par rapport à la pluralité d'éléments d'antenne (107-111) et incluant des facteurs d'imperfection d'antenne, $_p$, un pour chacun de la pluralité d'éléments d'antenne (107-111), qui représentent l'effet dépendant de l'angle de direction d'arrivée des imperfections d'antenne ;
      définir une fonction objective basée sur x et $\tilde{A}$ ;
      rechercher un ensemble d'angles de direction d'arrivée pour chacune de la pluralité de cibles (105, 106) par l'évaluation répétée de la fonction d'objectif pour une pluralité de matrices candidates basées sur la matrice $\tilde{A}$ qui comportent chacune différents vecteurs angle de direction d'arrivée sur un espace de recherche, où les angles dudit ensemble d'angles de direction d'arrivée sont dérivés d'une des matrices candidates de la pluralité de matrices candidates qui fournit l'une parmi une évaluation maximale et une évaluation minimale de la fonction d'objectif sur l'espace de recherche ; et
      où ledit espace de recherche comprend une pluralité de points discrets associés aux angles de direction d'arrivée.

Figure 1

113    102

107
108
109
110
111

112    104A    105

$\theta_1$

$\theta_2$

104B

101    100    103    106    104

Figure 2

$\theta$

d cos θ

d sin θ

107    108

d

Figure 3

300

$13\lambda/2$

301  302        303    304              305  306        307      308

$\lambda/2$    $3\lambda/2$    $\lambda$            $\lambda/2$    $3\lambda/2$    $\lambda$

Figure 4

401

Figure 5

**EP 4 184 207 B1**

**REFERENCES CITED IN THE DESCRIPTION**

**Patent documents cited in the description**

- JP 2020003333 A

**Non-patent literature cited in the description**

- **HEONKYO SIM et al.** Improved DOA estimation method by distinction of different transmit signals in automotive MIMO frequency-modulated continuous wave radar systems. *IET Radar, Sonar & Navigation*, 2020, ISSN 1751-8784

- **PENG CHEN et al.** Off-Grid DOA Estimation Using Sparse Bayesian Learning in MIMO Radar With Unknown Mutual Coupling. *IEEE Transactions on Signal Processing*, January 2019, vol. 67 (1)